(19) Europäisches Patentamt / European Patent Office / Office européen des brevets

(11) **EP 3 516 582 B1**

(12) **EUROPEAN PATENT SPECIFICATION**

(45) Date of publication and mention
of the grant of the patent:
**25.06.2025 Bulletin 2025/26**

(21) Application number: **17777333.0**

(22) Date of filing: **21.09.2017**

(51) International Patent Classification (IPC):
**G06V 10/764** (2022.01)  **G06V 10/774** (2022.01)
**G06V 10/82** (2022.01)  **G06V 20/56** (2022.01)
**G06V 20/58** (2022.01)

(52) Cooperative Patent Classification (CPC):
**G06V 20/58; G06V 10/764; G06V 10/774;
G06V 10/82; G06V 20/56; G06V 20/588**

(86) International application number:
**PCT/GB2017/052818**

(87) International publication number:
**WO 2018/055378 (29.03.2018 Gazette 2018/13)**

(54) **AUTONOMOUS ROUTE DETERMINATION**

AUTONOME ROUTENBESTIMMUNG

DÉTERMINATION DE PARCOURS AUTONOME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.09.2016 GB 201616097
06.03.2017 GB 201703527**

(43) Date of publication of application:
**31.07.2019 Bulletin 2019/31**

(73) Proprietor: **Oxa Autonomy Ltd
Oxford Oxfordshire OX4 2FL (GB)**

(72) Inventors:
• **BARNES, Daniel
Oxford
Oxfordshire OX2 0JB (GB)**
• **MADDERN, William
Oxford
Oxfordshire OX2 0JB (GB)**

• **POSNER, Ingmar
Oxford
Oxfordshire OX2 0JB (GB)**

(74) Representative: **Barker Brettell LLP
100 Hagley Road
Edgbaston
Birmingham B16 8QQ (GB)**

(56) References cited:
**WO-A1-2012/122589     US-B1- 8 855 849**

• **LINEGAR CHRIS ET AL: "Work smart, not hard:
Recalling relevant experiences for vast-scale but
time-constrained localisation", 2015 IEEE
INTERNATIONAL CONFERENCE ON ROBOTICS
AND AUTOMATION (ICRA), IEEE, 26 May 2015
(2015-05-26), pages 90 - 97, XP033168396, DOI:
10.1109/ICRA.2015.7138985**

**Description**

This invention relates to the generation of a proposed path, and more particularly to a weakly-supervised approach to segmenting proposed drivable paths in images with the goal of autonomous driving in various environments, including urban environments.

The invention is described herein with reference to a data collection vehicle recording a route. However, the skilled person will appreciate that the invention is more widely applicable and may use route images collected in any way, including collating images from a variety of different sources.

Further, the invention is described herein in relation to autonomous or semi-autonomous vehicles driving through urban environments, but the skilled person will appreciate that the path proposals identified may be used for other purposes (for example, to identify a route for a person to walk), and that the techniques may be applied to non-urban environments. Nonetheless, the invention is currently expected to have particular utility in the field of autonomous vehicles driving in urban environments.

Road scene understanding is a critical component for decision making and safe operation of autonomous vehicles in urban environments. Given the structured nature of on-road driving, all autonomous vehicles must follow the "rules of the road"; crucially, driving within designated lanes in the correct direction and negotiating intersections.

Traditional methods of camera-based drivable path estimation for road vehicles involve pre-processing steps to remove shadow and exposure artefacts (see, for example, J. M. "Alvarez, A. M. L'opez, and R. Baldrich, "Shadow resistant road segmentation from a mobile monocular system", in Iberian Conference on Pattern Recognition and Image Analysis. Springer, 2007, pp. 9-16, and I. Katramados, S. Crumpler, and T. P. Breckon, "Real-time traversable surface detection by colour space fusion and temporal analysis", in International Conference on Computer Vision Systems. Springer, 2009, pp. 265-274.), extraction of low-level road and lane features (see, for example J. C. McCall and M. M. Trivedi, "Video-based lane estimation and tracking for driver assistance: survey, system, and evaluation", IEEE transactions on intelligent transportation systems, vol. 7, no. 1, pp. 20-37, 2006, and K. Yamaguchi, A. Watanabe, T. Naito, and Y. Ninomiya, "Road region estimation using a sequence of monocular images", in Pattern Recognition, 2008. ICPR 2008. IEEE, 2008, pp. 1-4), fitting road and lane models to feature detections (see, for example, R. Labayrade, J. Douret, J. Laneurit, and R. Chapuis, "A reliable and robust lane detection system based on the parallel use of three algorithms for driving safety assistance", IEICE transactions on information and systems, vol. 89, no. 7, pp. 2092-2100, 2006, and A. S. Huang and S. Teller, "Probabilistic lane estimation for autonomous driving using basis curves", Autonomous Robots, vol. 31, no. 2-3, pp. 269-283, 2011), and temporal fusion of road and lane hypotheses between successive frames (see, for example, R. Jiang, R. Klette, T. Vaudrey, and S. Wang, "New lane model and distance transform for lane detection and tracking", in International Conference on Computer Analysis of Images and Patterns. Springer, 2009, pp. 1044-1052, and H. Sawano and M. Okada, "A road extraction method by an active contour model with inertia and differential features", IEICE transactions on information and systems, vol. 89, no. 7, pp. 2257-2267, 2006).

While effective in well-maintained road environments, these approaches suffer in the presence of occlusions, shadows and changing lighting conditions, unstructured roads and areas with few or no markings (see A. B. Hillel, R. Lerner, D. Levi, and G. Raz, "Recent progress in road and lane detection: a survey", Machine vision and applications, vol. 25, no. 3, pp. 727-745, 2014). Robustness can be significantly increased by combining images with radar (see B. Ma, S. Lakshmanan, and A. O. Hero, "Simultaneous detection of lane and pavement boundaries using model-based multisensor fusion", IEEE Transactions on Intelligent Transportation Systems, vol. 1, no. 3, pp. 135-147, 2000) or LIDAR (see A. S. Huang, D. Moore, M. Antone, E. Olson, and S. Teller, "Finding multiple lanes in urban road networks with vision and LIDAR", Autonomous Robots, vol. 26, no. 2-3, pp. 103-122, 2009) but at an increased sensor cost.

More recently, advances in image processing using deep learning (see Y. LeCun, Y. Bengio, and G. Hinton, "Deep learning", Nature, vol. 521, no. 7553, pp. 436-444, 2015) have led to impressive results on the related problem of semantic segmentation, which aims to provide per-pixel labels of semantically meaningful objects for input images (see, for example J. Long, E. Shelhamer, and T. Darrell, "Fully convolutional networks for semantic segmentation", in Proceedings of the IEEE Conference on Computer Vision and Pattern Recognition, 2015, pp. 3431-3440, G. Papandreou, L.-C. Chen, K. Murphy, and A. L. Yuille, "Weakly- and semi-supervised learning of a DCNN for semantic image segmentation", arXiv preprint ar Xiv:1502.02734, 2015 and the paper of V. Badrinarayanan *et al* cited above). Deep networks make use of the full image context to perform semantic labelling of road and lane markings, and hence are significantly more robust than previous feature-based methods. However, for automated driving these approaches depend on large-scale manually-annotated road scene datasets (notably CamVid (G. J. Brostow, J. Fauqueur, and R. Cipolla, "Semantic object classes in video: A high-definition ground truth database ", Pattern Recognition Letters, vol. 30, no. 2, pp. 88-97, 2009) and Cityscapes (M. Cordts, M. Omran, S. Ramos, T. Rehfeld, M. Enzweiler, R. Benenson, U. Franke, S. Roth, and B. Schiele, "The Cityscapes dataset for semantic urban scene understanding", arXiv preprint arXiv:1604.01685, 2016), consisting of 700 and 5,000 labelled frames respectively), which are time-consuming and expensive to produce.

The challenges in building large-scale labelled datasets have led some researchers to consider virtual environments, for which ground truth semantic labels can be rendered in parallel with synthetic camera images. Methods using customised video game engines have been used to produce hundreds of thousands of synthetic images with corresponding ground truth labels (see G. Ros, L. Sellart, J. Materzynska, D. Vazquez, and A. M. Lopez, "The SYNTHIA Dataset: A large collection of synthetic images for semantic segmentation of urban scenes", in Proceedings of the IEEE Conference on Computer Vision and Pattern Recognition, 2016, pp. 3234-3243, and S. R. Richter, V. Vineet, S. Roth, and V. Koltun, "Playing for data: Ground truth from computer games", arXiv preprint arXiv:1608.02192, 2016). While virtual environments allow large-scale generation of ground truth semantic labels, they present two problems: firstly, rendering pipelines are typically optimised for speed and may not accurately reflect real-world images (both above approaches suggest rendered images are used only for augmenting real-world datasets and hence manual labelling is still necessary for at least a sub-set of the datasets); secondly, the actions of the vehicle and all other agents in the virtual world must be pre-programmed and may not resemble real-world traffic scenarios.

A recent method uses sparse 3D prior information to transfer labels to real-world 2D images (see J. Xie, M. Kiefel, M.T. Sun, and A. Geiger, "Semantic instance annotation of street scenes by 3D to 2D label transfer", in Conference on Computer Vision and Pattern Recognition (CVPR), 2016) but requires sophisticated 3D reconstructions and manual 3D annotations.

Some approaches have proposed bypassing segmentation entirely and learning a direct mapping from input images to vehicle behaviour (see D. A. Pomerleau, "ALVINN: An autonomous land vehicle in a neural network", DTIC Document, Tech. Rep., 1989, and U. Muller, J. Ben, E. Cosatto, B. Flepp, and Y. L. Cun, "Off-road obstacle avoidance through end-to-end learning", in Advances in neural information processing systems, 2005, pp. 739-746). These methods also use the driver of the data collection vehicle to generate a label for each image, so generating the supervised labels for the network (e.g. a single steering angle value per image) and have recently demonstrated impressive results in real-world driving tests (see M. Bojarski, D. Del Testa, D. Dworakowski, B. Firner, B. Flepp, P. Goyal, L. D. Jackel, M. Monfort, U. Muller, J. Zhang, et al., "End to end learning for self-driving cars", arXiv preprint ar Xiv:1604.07316, 2016), but it is not clear how this approach generalises to scenarios where there are multiple possible drivable paths to consider (e.g. intersections). This approach uses a convolutional neural network to map raw pixels from a single front-facing camera directly to steering commands; there is no segmentation of a proposed path extending into the future/image.

Current commercial systems that perform driver assistance and on-road autonomy typically depend on visual recognition of lane markings and explicit definitions of lanes and traffic rules, and therefore rely on simple road layouts with clear markings (e.g. well-maintained highways). See, for example, S. Yenikaya, G. Yenikaya, and E. Diiven, "Keeping the vehicle on the road: A survey on on-road lane detection systems", ACM Computing Surveys (CSUR), vol. 46, no. 1, p. 2, 2013, and A. B. Hillel, R. Lerner, D. Levi, and G. Raz, "Recent progress in road and lane detection: a survey", Machine vision and applications, vol. 25, no. 3, pp. 727-745, 2014.

To extend these systems beyond multi-lane highways to complex urban environments and rural or undeveloped locations without clear or consistent lane markings, an alternative approach is proposed.

The document by LINEGAR CHRIS ET AL: "Work smart, not hard: Recalling relevant experiences for vast-scale but time-constrained localisation" in the , 2015 IEEE INTERNATIONAL CONFERENCE ON ROBOTICS AND AUTOMATION (ICRA), IEEE, 26 May 2015, pages 90-97, discloses a method of generating data for autonomous robot navigation system using odometry data collected along a path where the robot has previously driven.

According to a first aspect of the invention, there is provided a method of training a segmentation unit according to claim 1.

The method may require little or no supervision, and/or may not require manual labelling of images.

The method comprises obtaining data from a data collection vehicle driven through an environment, the data comprising:

vehicle odometry data detailing a path taken by the vehicle through the environment,
obstacle sensing data detailing obstacles detected in the environment; and images of the environment.

The method comprises using the obstacle sensing data to label one or more portions of at least some of the images as obstacles.

The method comprises using the vehicle odometry data to label one or more portions of at least some of the images as the path taken by the vehicle through the environment.

Conveniently, the training dataset is created from the labelled images, and may or may not be constituted by the labelled images (i.e. the creation of the training dataset may simply comprise collating the labelled images, without the addition of any further data or image processing, or there may be additional data).

The method may further comprise a calibration process to allow the odometry data and the obstacle sensing data to be matched to the images.

According to another aspect of the invention, there is provided a segmentation unit trained in accordance with claim 2.

According to another aspect of the invention, there is provided an autonomous vehicle as defined by claim 5.

The vehicle comprises a sensor arranged to capture images of an environment around the autonomous vehicle.

A route of the autonomous vehicle through the environment is determined by the segmentation unit using images captured by the sensor. In some embodiments, additional systems may be used to make a decision based on the path proposals from the segmentation unit.

The autonomous vehicle may only comprise a monocular camera, as monocular camera data is sufficient for the trained segmentation unit.

The person skilled in the art will appreciate that, in some embodiments, the data collection vehicle may also be the autonomous vehicle of the further aspect of the invention. In such embodiments, obstacle sensing data and odometry data may or may not be recorded whilst driving autonomously. A different vehicle is therefore not required.

Features described in relation to one of the above aspects of the invention may be applied, mutatis mutandis, to the other aspect of the invention. Further, the features described may be applied to the or each aspect in any combination.

There now follows by way of example only a detailed description of embodiments of the present invention with reference to the accompanying drawings in which:

**Figure 1A** is a schematic view of a method of an embodiment;
**Figure 1B** illustrates examples of the training images and live images used and produced in the method of Figure 1A;
**Figure 2** shows a schematic view of sensor extrinsics for weakly-supervised labelling suitable for use with various embodiments of the invention;
**Figure 3** illustrates a proposed path projection and labelling process of an embodiment;
**Figures 4A-C** show an input image and proposed path labels for an input image before and after applying obstacle labels, respectively;
**Figures 5A-C** show raw image and LIDAR data, fitting of a ground plane to the data, and labelling of obstacles in accordance with an embodiment, respectively;
**Figure 6** shows examples of training images with weakly-supervised labels generated in accordance with an embodiment;
**Figure 7** shows examples of semantic segmentation in accordance with an embodiment, performed on images captured at the same location under different conditions;
**Figure 8** shows examples of path proposals generated in accordance with an embodiment, in locations without explicit lane dividers or road markings;
**Figures 9A-C** show an input image, path segmentation results for that image using a SegNet model trained on a small number of manually-annotated ground truth images, and path segmentation results for that image using a segmentation network trained in accordance with an embodiment and without manual annotation, respectively;
**Figures 10 A-C** show an input image, a proposed path segmentation for that image in accordance with an embodiment, and obstacle and unknown area segmentations in accordance with an embodiment, respectively;
**Figure 11** shows examples of proposed path segmentation failures;
**Figure 12** shows examples of proposed path generalisation to multiple routes; and
**Figure 13** illustrates a method of an embodiment.

In the figures, like reference numerals are used to reference like components.

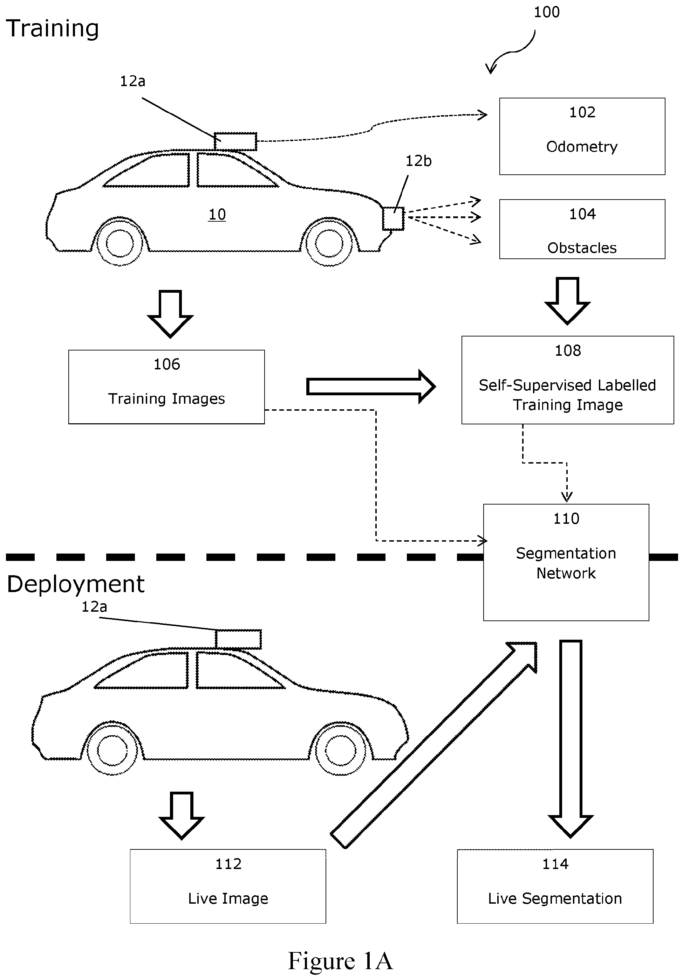

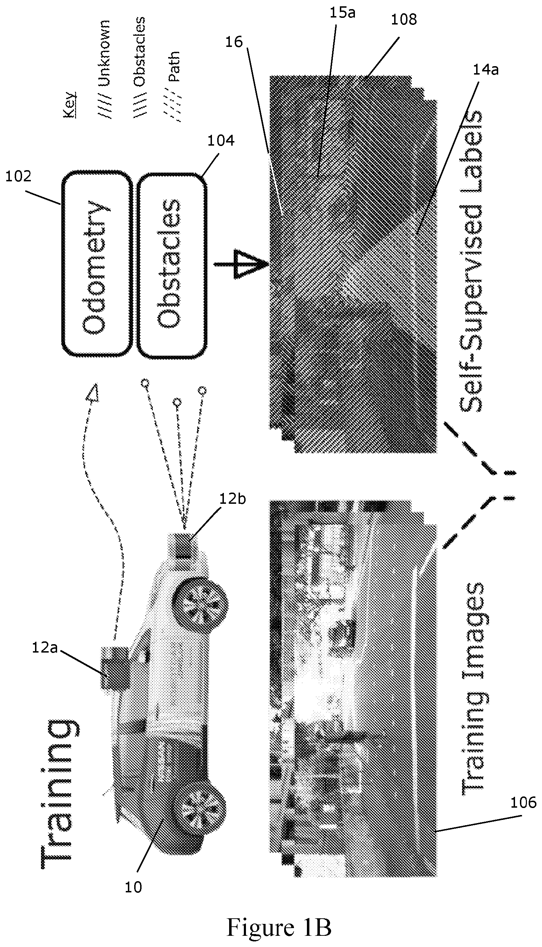

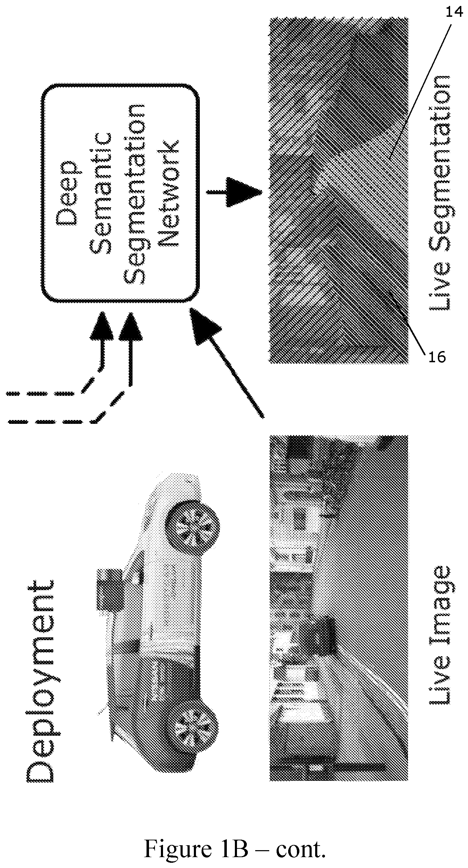

Embodiments of the invention are described in relation to a sensor 12 mounted upon a vehicle 10, as is shown in Figure 1. The skilled person would understand that the vehicle 10 could be replaced by a plane, boat, aerial vehicle or robot, or by a person carrying a sensor 12, amongst other options. In still other embodiments, the sensor used may be stationary. Further, any feature or combination of features described with respect to one embodiment may be applied to any other embodiment.

The embodiment being described utilises a weakly-supervised approach 100 to segmenting path proposals for a road vehicle 10 in urban environments given a single monocular input image 112. Weak supervision is used to avoid expensive manual labelling by using a more readily available source of labels instead. In the embodiment being described, weak supervision involves creating labels of the proposed path in images 112 by leveraging the route actually travelled by a road vehicle 10. In the embodiment being described, the labels are pixel-wise; i.e. pixels of an image 112 are individually labelled.

The approach 100 is capable of segmenting a proposed path 14 for a vehicle 10 in a diverse range of road scenes, without relying on explicit modelling of lanes or lane markings. The term "path proposal" is defined as a route a driver would be expected to take through a particular road and traffic configuration.

The approach 100 described herein uses the path taken 14a by the data collection vehicle 10 as it travels through an environment to implicitly label proposed paths 14 in the image 106 in the training phase, but may still allow a planning algorithm to choose the best path 14 for the a route in the deployment phase.

A method 100 of automatically generating labelled images 114 containing path proposals 14 by leveraging the behaviour of the data collection vehicle driver along with additional sensors 12a, 12b mounted to the vehicle 10, is described, as illustrated in Figure 1A and Figure 1B. The skilled person will appreciate that the data collection vehicle 10 could be an autonomous vehicle, with no driver, in some embodiments.

Using this approach 100, vast quantities of labelled training data 106 can be generated without any manual annotation, spanning a wide variety of road and traffic configurations under a number of different lighting and weather conditions limited only by the time spent driving the data collection vehicle 10. This labelled training data 106 can be thought of as weakly-supervised input for training a path segmentation unit 110. In this case, the only "supervision" or supervisory signal is the behaviour of the data collection vehicle driver; the driver itself may be an autonomous unit. In particular, the only "supervision" or supervisory signal used, by the embodiment being described to label training date, may be the movements of the data collection vehicle; manual seeding or labelling of training images may therefore be substantially or completely avoided.

Embodiments of the invention as disclosed herein relate not only to the method of generating a training dataset 108 described, but also to the resultant training dataset itself, and to applications of that dataset. The method 100 described allows a training dataset to be generated without any manual labeling - either of each training image, or of one training image (or a subset of training images) which is then used as a seed which allows labels to be propagated to other images.

The skilled person will appreciate that a set of labeled images 108 generated by the method 100 disclosed herein may form part of a training dataset which also includes manually labeled images, images labeled by a different technique and/or unlabeled images.

The training dataset 108 produced is arranged to be used in autonomous route determination. In particular, the training dataset shows examples of paths 14a within images 106 which were chosen by a driver (or an autonomous vehicle 10). A segmentation unit 110 (such as SegNet - V. Badrinarayanan, A. Handa, and R. Cipolla, "SegNet: A deep convolutional encoder-decoder architecture for robust semantic pixelwise labelling," arXiv preprint arXiv:1505.07293, 2015.) trained on the training dataset 108 is therefore taught to identify a path 14 within an image 112 that would be likely to be chosen by a driver.

In Figure 1A and Figure 1B, the data collection vehicle 10 is equipped with a camera 12a and odometry and obstacle sensors 12b. The vehicle 10 is used to collect data 102, 104, 106 during normal driving (first (ie leftmost) part of Figure 1B). In the embodiment being described, the data 102, 104, 106 comprises odometry data 102, obstacle data 104 and visual images 106. In other embodiments, other data may generated and for example, it is possible that the visual images, in particular, may be replaced with other representations of the environment, such as LiDAR scans, or the like.

The visual images 106 obtained by the data collection vehicle 10 are described as training images 106 as these are labelled as described below and then used to train one or more systems or devices to identify path proposals in other images (that is proposed paths for a vehicle to traverse the environment contained within the visual images 106).

In the embodiment being described the training images 106 are used to train a segmentation framework (in particular a deep semantic segmentation network 110), which may be a neural network such that the trained segmentation framework can predict routes likely to be driven by a driver who contributed to the training dataset in new/unknown scenes.

The segmentation framework, or the output therefrom, can then be used to inform a route planner. The skilled person will appreciate that route planners generally operate by minimising a cost function so as to provide a recommended route. In some embodiments, the segmentation framework is arranged to output a suitable cost function for a route planner, or suitable parameters for a cost function of a route planner.

The training data 106 can therefore be used to train a system able to predict routes likely to be driven by the original driver through a scene at hand. That system can then be used to inform a trajectory planner/route planner (e.g. via mapping the route proposal into a planner cost function). The planner may or may not be separate from the trained system.

In alternative embodiments, a single sensor 12 may provide both odometry 102 and obstacle 104 data. In yet further embodiments, more sensors may be provided.

The odometry 102 and obstacle data 104 is projected into the training images 106 to generate weakly-supervised labels 108 relevant for traversing through the environment, such as used in autonomous driving. The chosen labels are "Unknown", "Obstacles" and "Path" in the embodiment being described. In alternative or additional embodiments, more, fewer or different labels may be used. For example, "Unknown" may not be used, and/or "Obstacles" may be subdivided by obstacle type. The labels are used to classify regions of the training images 106.

In the Figures, diagonal lines sloped at an acute angle to the horizontal, as measured from the right hand side (///), are used to mark regions identified as "Unknown" 16, diagonal lines sloped at an obtuse angle to the horizontal, as measured from the right hand side (\\\), are used to mark regions identified as "Obstacles" 15a, and broken diagonal lines are used to mark regions identified as "Path" 14a.

The labelled images 108 are, in the embodiment being described, used to train a deep semantic segmentation network 110. The skilled person will appreciate that, although a deep semantic network 110 was used in the embodiment being described, other machine learning systems may be used as a segmentation unit 110 instead of or as well as a deep semantic network 110 (any of these may be referred to as a segmentation network 110). The skilled person will appreciate that, in various embodiments, the segmentation unit 110 may be implemented in software and may not have unique hardware, or vice versa.

At run-time, a vehicle 10 equipped with only a monocular camera 12a can perform live segmentation of the drivable path eg 14a and obstacles 15a using the trained segmentation network 110 (second part of Figure 1B), even in the absence of explicit lane markings. The skilled person will appreciate that the vehicle 10 used at run-time may be the same as that used for data collection, or a different vehicle. Further, although a monocular camera 12a is sufficient, alternative or additional sensors may be used.

In the embodiment being described, the data was used to train an off-the-shelf deep semantic segmentation network 110 (e.g. SegNet, see the paper of V. Badrinarayanan *et al.* cited above) to produce path proposal segmentations 114 using only a monocular input image 112 (e.g. a photograph). The deep semantic segmentation network 110 may then be used as part of, or to feed into, a route planner, which may be an in-car or portable device used to suggest routes to a driver/user.

The approach 100 was evaluated using two large-scale autonomous driving datasets: the KITTI dataset (see A. Geiger, P. Lenz, C. Stiller, and R. Urtasun, "Vision meets robotics: The KITTI dataset", The International Journal of Robotics Research, p. 0278364913491297, 2013), collected in Karlsruhe, Germany, and the large-scale Oxford RobotCar Dataset (http://robotcar-dataset.robots.ox.ac.uk), consisting of over 1000 km of recorded driving in Oxford, UK, over the period of a year.

For each of these datasets, additional sensors 12a, 12b on the vehicle 10 and the trajectory taken by the driver were used as the weakly-supervised input to train a pixel-wise semantic classifier. Segmentation results are presented on the KITTI Road (J. Fritsch, T. Kuehnl, and A. Geiger, "A new performance measure and evaluation benchmark for road detection algorithms", in 16th International IEEE Conference on Intelligent Transportation Systems (ITSC 2013) IEEE, 2013, pp. 1693-1700), and with Object and Tracking benchmarks, and the performance under different lighting and weather conditions is investigated using the Oxford dataset.

WEAKLY-SUPERVISED SEGMENTATION

In the following section, an embodiment of the invention for generating weakly-supervised training data 108 for proposed path segmentation using video and other sensor data recorded from a (in the embodiment being described) manually-driven vehicle 10 is outlined. In some embodiments, the vehicle 10 used to record video and other sensor data (the data collection vehicle 10) may be autonomously driven, but embodiments of the invention are described below in relation to a manually driven data collection vehicle 10 as this was the arrangement used for the test results described. The skilled person will appreciate that other factors specific to the test performed may be varied or eliminated in other embodiments of the invention.

As regions within an image 106 corresponding to the route taken 14a by the vehicle 10 and to obstacles 15a are identified and marked, the image 106 is described as being segmented, forming a segmented image 108. The segmented images 108 can be used as training data.

Once trained on the training data 108, a segmentation unit 110 can then segment new images 112 in the same way, so forming new segmented images 114.

The segmented images 114 formed at run-time may optionally be added to the training data 108 and used in the training phase thereafter, optionally subject to driver/user approval.

A. Sensor Configuration

In addition to a monocular camera 12a to collect input images 106, 112 (i.e. images of the environment around the data collection vehicle 10), the approach 100 of the embodiment being described uses the following two capabilities of the data collection vehicle 10:

(i) Vehicle odometry: a method of estimating the motion of the vehicle, and therefore the trajectory of the vehicle through the environment. For this, stereo visual odometry is used in this embodiment (W. Churchill, "Experience based navigation: Theory, practice and implementation", Ph.D. dissertation, University of Oxford, Oxford, United Kingdom, 2012), although other methods using inertial systems or wheel odometry could be used alternatively or additionally. Further, LIDAR, or GPS (or another Global Navigation Satellite System such as GLONASS, Galileo or Beidou) or the likes could be used, additionally or alternatively, as sources of odometry data; and

(ii) Obstacle sensing: a method of detecting the 3D positions of impassible objects (both static and dynamic) in front of the vehicle helps to ensure that dynamic objects (e.g. cyclists, pedestrians and other vehicles) are not accidentally included in the "drivable"/chosen path label area. For this, a LIDAR scanner is used in the embodiment being described, although other methods that use dense stereo (D. Pfeiffer and U. Franke, "Efficient representation of traffic scenes by means of dynamic stixels", in Intelligent Vehicles Symposium (IV), 2010 IEEE, 2010, pp. 217-224) or automotive radar, or the likes, would also be suitable. The data obtained is referred to as obstacle sensing data (104).

A vehicle odometry system 12a and an obstacle sensing system 12b may be mounted on, or integral with, the data collection vehicle 10. In either case, the sensing systems 12a, 12b move with the vehicle 10 and may therefore be described as being onboard the vehicle 10.

Note that the vehicle odometry 102 and obstacle sensing 104 capabilities used for collecting training data 106, 108 are not required when using the training data, nor when operating an autonomous vehicle 10 using a segmentation unit 110 trained on the training data; the resulting network can operate with only a monocular input image 112, although the skilled person will appreciate that additional sensors and/or data inputs may also be used.

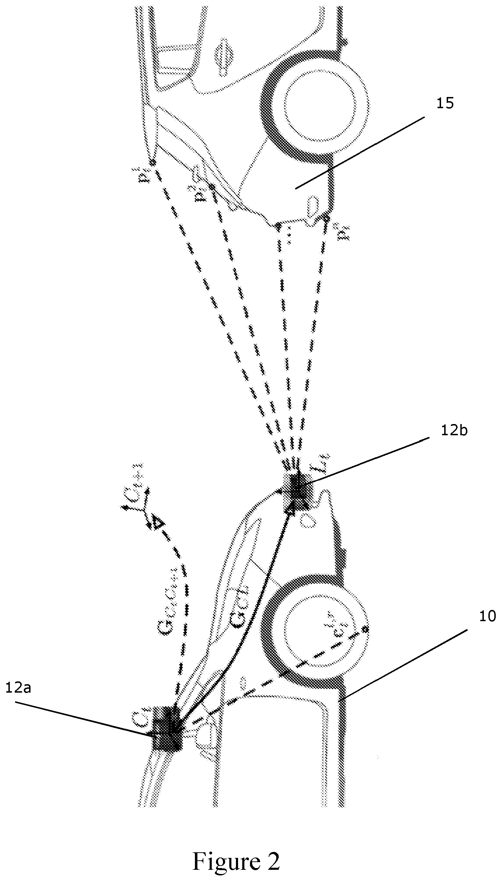

Figure 2 illustrates the sensor extrinsics for a vehicle 10 equipped with a stereo camera 12a and LIDAR sensor 12b. The skilled person will appreciate that other camera types may be used to collect the input images 106 in other embodiments, and/or that a camera 12b forming part of a visual odometry system 12b may provide the images 106.

Figure 2 shows the data collection vehicle 10 equipped with a camera C 12a and obstacle sensor L 12b, e.g. a LIDAR scanner. The extrinsic transform $\mathbf{G}_{CL}$ between the camera 12a and LIDAR scannner 12b is found using a calibration routine. The contact point $c^{\{l,r\}}$ of the left (l) and right (r) wheels on the ground relative to the camera frame $C$ is also measured at calibration time. At time $t$, the LIDAR scanner observes a number of points $p_t^{1...n}$ on obstacles 15, including other vehicles 15 on the road. The relative pose $G_{CtC_{t+1}}$ of the camera between time $t$ and $t+1$ is determined using vehicle odometry, e.g. using a stereo camera. The relative pose $G_{CtC_{t+1}}$ can be used to determine the motion of the vehicle 10.

B. Weakly-Supervised Labelling

In the embodiment being described, pixels of images are assigned to, and labelled as being part of, one or more classes (ie they have class labels associated with them). To generate class labels for pixels in the input image(s) 112, recorded data from the data collection vehicle 10 driven by a human driver in a variety of traffic and weather conditions is used in the embodiment being described. The classes/labels described herein correspond to obstacles 15 in the environment which are in front of the data collection vehicle 10, path taken 14 by the data collection vehicle 10 through the environment, and "unknown" for the remainder 16, i.e. for any unlabeled area(s). In alternative embodiments, fewer classes may be used (e.g. not using "unknown") and/or more classes may be used (e.g. separating dynamic and static obstacles, or obstacles in front of the vehicle from other obstacles).

In the embodiment being described, each pixel is assigned to a class 14, 15, 16. In alternative embodiments, some pixels may be unassigned, and/or averages may be taken across pixel groups. In this way, different portions of an image 106, 112 are labeled as belonging to different classes (or not labeled, in some embodiments). There may be more than one portion of an image 106, 112 relating to the same class within a single image; for example, an obstacle on the road as well as obstacles on either side of the road. In some images 106, 112, there may be no portion(s) in a particular class; for example where the image represents a portion of the environment fully within the vehicle's path, with no obstacles 15 or unknown areas 16.

The general approach of methods that learn to drive by demonstration is used for the embodiment described herein (see, for example B. D. Argall, S. Chernova, M. Veloso, and B. Browning, "A survey of robot learning from demonstration", Robotics and autonomous systems, vol. 57, no. 5, pp. 469-483, 2009, and D. Silver, J. A. Bagnell, and A. Stentz, "Learning autonomous driving styles and maneuvers from expert demonstration", in Experimental Robotics. Springer, 2013, pp. 371-386), and it is assumed that the *proposed path* 14 corresponds to the one chosen by the driver of the data collection vehicle 10 in each scenario. Labels 14, 15, 16 are then generated by projecting the *future* path of the vehicle 10 into each image 112, over which object labels as detected by the LIDAR scanner are superimposed as follows. "Future" in this context means after the image in question 112 was taken - the "future" path is the path driven by the vehicle 10, as recorded by the odometry system 12b during the training phase (first part of Figure 1B), and is the proposed path for a vehicle 10 to take in the deployment phase (second part of Figure 1B).

The segmentation unit 110 segments new images 112 (i.e. images not forming part of the training dataset) provided to it in accordance with its training, thereby marking proposed paths 14 within the new images 112.

The segmentation unit 110 may be onboard an autonomous (or semi-autonomous) vehicle 10 and arranged to receive images 112 taken by a camera 12a on the autonomous vehicle 10 and to process those images so as to propose a path 14 by segmentation 114 of the image. The route proposals 14 may be provided in real-time so as to enable the output of the segmentation unit 110 to be used in directing the vehicle 10.

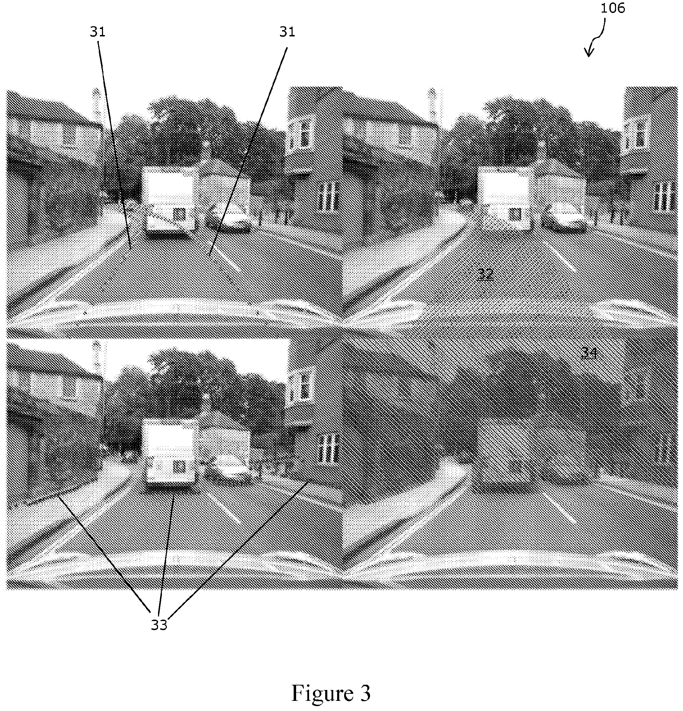

The embodiments being described use real images 106 and vehicle path data 102 for the training dataset/to train the system. The supervisory signal as to a proposed path 14 is the path 14a actually driven by the data collection vehicle 10, projected into the image 106 as a label (shown in Fig 3.). That combined with the obstacle labels 15 allows an informative training image 108 and general representation to be generated.

The embodiments described allow for multiple proposed paths 14 (for example left and right at an intersection) and obstacle segmentations 15. In some embodiments, an additional system may be used after the segmentation to decide how to utilise the path proposals 14.

The skilled person will appreciate that the labeled images 108 produced may be used as a test dataset as well as, or instead of, as a training dataset. A trained segmentation unit 110 could be given the images 106 of the test dataset without segmentation information 108 and the output of the trained segmentation unit can then be compared to the segmented images 108 of the test dataset to assess the performance of the segmentation unit 110. Any features described with respect to the training data set may therefore be applied equally to a test data set.

*Proposed path projection:* To project the future path 14a of the vehicle 10 into the current frame 106, the size of the vehicle 10 and the points of contact with the ground during the trajectory are used. The position of the contact points $\mathbf{c}_{\{l,r\}}$ of the front left and right wheels on the ground relative to the camera $C$ may be determined as part of a calibration procedure. The position of the contact point $\mathbf{c}_{\{l,r\}}$ in the current camera frame $C_t$ after $k$ frames is then found as follows:

$$^{C_t}\mathbf{c}_{\{l,r\},k} = KG_{C_t C_{t+k}}\mathbf{c}_{\{l,r\}} \tag{1}$$

where K is the perspective projection matrix for the camera $C$ and $G_{CtC_{t+k}}$ is the SE(3) chain of relative pose transforms formed by vehicle odometry from frame $t$ to frame $t + k$ as follows:

$$G_{C_t C_{t+k}} = G_{C_t C_{t+1}} \times G_{C_{t+1}C_{t+2}} \times \dots \times G_{C_{t+k-1}C_{t+k}} \tag{2}$$

Proposed path pixel labels 14 are then formed by filling quadrilaterals in image coordinates corresponding to sequential future frames. The vertices of the quadrilateral are formed by the following points in camera frame $C_t$:

$$\{^{C_t}\mathbf{c}_{\{l,j\}}, {}^{C_t}\mathbf{c}_{\{l,j-1\}}, {}^{C_t}\mathbf{c}_{\{r,j-1\},k}, {}^{C_t}\mathbf{c}_{\{r,j\}}\} \tag{3}$$

where the index variable $j = \{1 \dots k\}$. An illustration of the proposed path projection and labelling process is shown in Figure 3.

Figure 3 shows ground contact points 31 (top two images) and obstacle points 33 (bottom two images) projected into images 106. At time $t$, ground contact points $\mathbf{c}_{\{l,r\},j}$ (top left, 31) corresponding to the path of the vehicle up to $k$ frames ahead are projected into the current image (top left, 32). Pixel labels corresponding to drivable paths 14 are filled in by drawing quadrilaterals between the left and right contact points between two successive frames (top right). At the same time, obstacle points $\boldsymbol{p}_t^i$ 33 from the current LIDAR scan are projected into the image 106 (bottom left). Pixel labels corresponding to obstacles are formed by extending each of these points to the top of the image (bottom right, 34). Note that the top and bottom sections of the image 106 corresponding to the sky and vehicle bonnet are removed before training in this embodiment.

The choice of frame count $k$ depends on the look-ahead distance required for path labelling and the accuracy of the vehicle odometry system 12b used to provide relative frame transforms. In practice $k$ is chosen such that the distance between first and last contact points $\|G_{CtC_{t+k}}\mathbf{c}_{\{l,r\}} - \mathbf{c}_{\{l,r\}}\|$ exceeds roughly 60 metres. Different camera setups with higher viewpoints may require greater path distances, but accumulated odometry error will affect far-field projections. In other embodiments, distances such as roughly any of the following may be chosen: 30m, 40m, 50m, 70m, 80m, 90m, 100, or any distance inbetween.

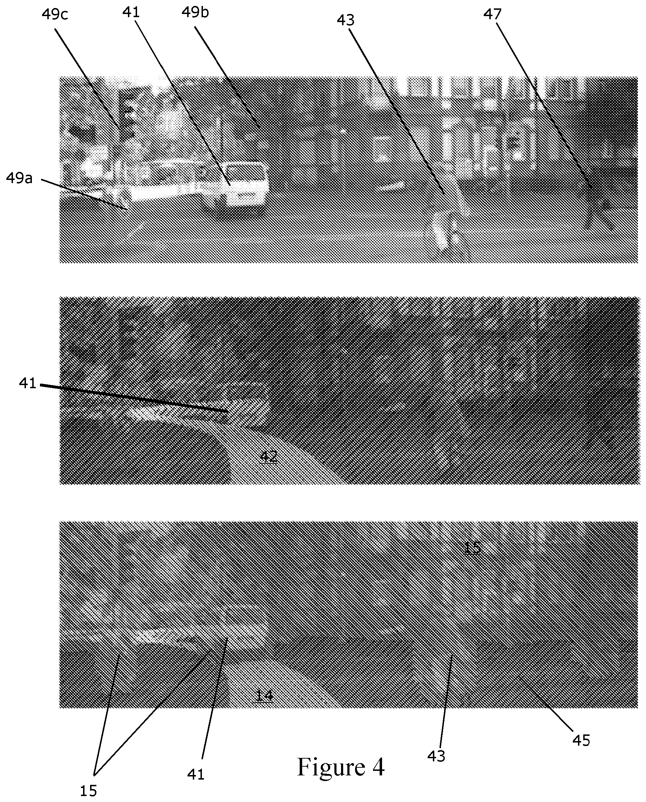

Figure 4 shows proposed path labels 14 for an input image (top) before (middle) and after (bottom) applying obstacle labels from the LIDAR scanner 12b. Without the obstacle labels 15, the proposed path 42 intersects vehicles 41 (or cyclists 43, pedestrians 47 or the likes) in the same lane as the path driven by the data collection vehicle 10, which in this case will erroneously label sections of the white van 41 as drivable route 14. Adding labels for obstacles 15 ensures that dynamic objects including the van 41, cyclist 43 and pedestrian 47 are marked as non-drivable, leading to a different proposed path 14. Note that static obstacles 49 such as the road sign 49a and the building 49b are also labelled as obstacles 15, which correctly handles occlusions (e.g. as the path turns right after the traffic lights 49c). The remaining portion, 45, may be labeled unknown.

*Obstacle projection:* For some applications it may be sufficient to use just the proposed path labels 14 to train a semantic segmentation network 110. However, for on-road applications in the presence of other vehicles 41 and dynamic objects, a naive projection of the path driven will intersect vehicles 41 in the same lane and label them as drivable paths 42 as illustrated in Figure 4. In the centre figure of Figure 4, it can be seen that the path 42 is intersected with the vehicle 41.

Intersecting paths with vehicles in this manner may lead to catastrophic results when the labelled images 108 are used to plan paths for autonomous driving, since vehicles and traffic may be labelled as traversable by the network.

The obstacle sensor 12b mounted on the vehicle 10, in this case a LIDAR scanner, is used for obstacle detection.

Each 3D obstacle point $p_t^i$ observed at time $t$ is projected into the camera frame $C_t$ as follows:

$$^{C_t}p_t^i = \mathbf{KG}_{CLp_t^i} \qquad (4)$$

Where $\mathbf{K}$ is the camera projection matrix and $\mathbf{G}_{CL}$ is the SE(3) extrinsic calibration between the camera and LIDAR sensor.

In the embodiment being described, for each camera-frame point $^{C_t}p_t^i$, an approach inspired by "stixels" (see the paper of D. Pfeiffer and U. Franke listed above, and also T. Scharwächter, M. Enzweiler, U. Franke, and S. Roth, "Stixmantics: A medium-level model for real-time semantic scene understanding", in European Conference on Computer Vision. Springer, 2014, pp. 533-548) is used, and all pixels in the image on and above the point are labelled as an obstacle 15. This helps to ensure that all locations above and behind the detected obstacle 15 are labelled as non-drivable, as illustrated in the third Figure of Figure 4 and as discussed relative to Figure 3.

Obstacle pixel labels 15 take precedence over proposed path labels 14 in the embodiment being described to facilitate correct labelling of safe drivable paths/the chosen path 14 as illustrated in Figure 4.

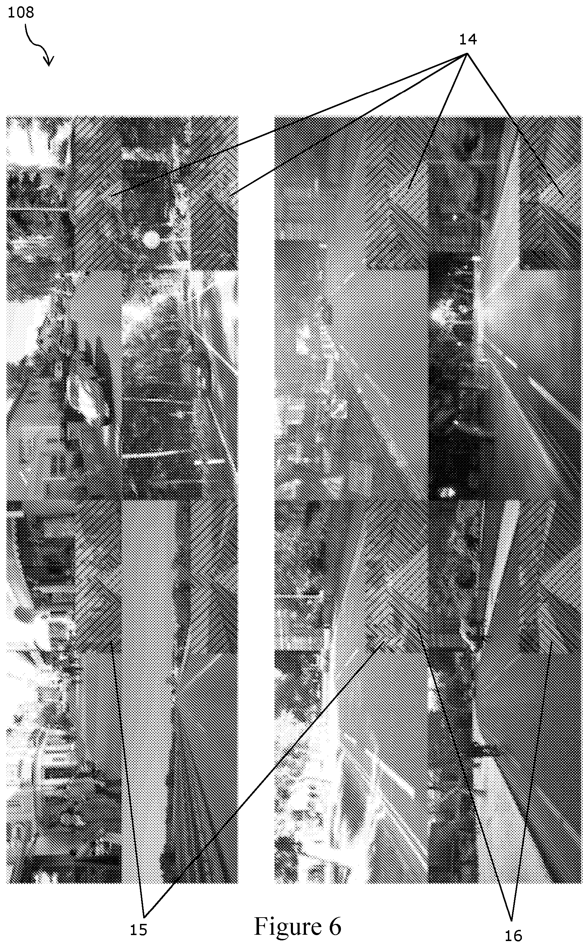

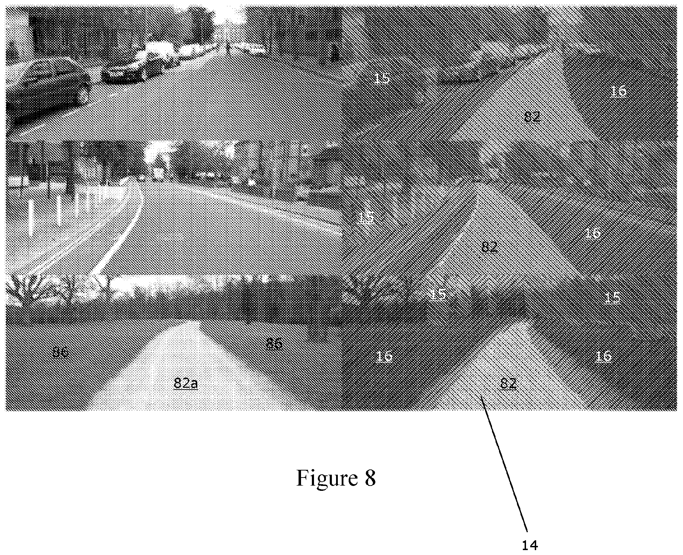

In most images 106, 112, there will be locations 116 labelled as neither proposed path nor obstacle. These correspond to locations 116 which the vehicle 10 has not traversed (and hence is not known to be traversable and is not part of the chosen path 14), but no positive identification of obstacles 15 have been made. Typically these areas correspond to the road area outside the current lane (including lanes for oncoming traffic), kerbs, empty pavements and ditches. These locations are referred to as "unknown area" 16, as it is not clear whether the vehicle 10 should enter these spaces during autonomous operation; this would be a decision for a higher-level planning framework as discussed below. Examples of unknown areas 16 can be seen in Figure 4, in which region 45 is marked as unknown - this region 45 comprises road surface over which the vehicle 10 has not driven and some pavement area. Similarly in Figure 6, pavement and unused road areas are classed as unknown areas 16. The grass 86 in Figure 8 is also classed as unknown 16.

*C. Semantic Segmentation*

Once proposed path 14, obstacle 15 and unknown area 16 labels are automatically generated for a large number of recorded images 106, these labelled images 108 can be used to train a semantic segmentation network 110 to classify new images 112 from a different vehicle 10 (or from the same vehicle, in some embodiments). In the example described, this different vehicle 10 was equipped with only a monocular camera 12a.

SegNet is used: a deep convolutional encoder-decoder architecture for pixel-wise semantic segmentation. Although higher-performing network architectures now exist (e.g. G. Papandreou, L. C. Chen, K. Murphy, and A. L. Yuille, "Weakly- and semi-supervised learning of a DCNN for semantic image segmentation", arXiv preprint arXiv:1502.02734, 2015), and others could be used, Seg-Net provides real-time evaluation on consumer GPUs, making it suitable for deployment in an autonomous vehicle 10.

The weakly-supervised labelling approach 100 being described can generate vast quantities of training data 108, limited only by the length of time spent driving the data collection vehicle 10. However, the types of routes driven will also bias the input data 102, 104, 106. As most on-road driving is performed in a straight line; a random sample of the training data will consist mostly of straight-line driving. In practice the data were subsampled to 4Hz, before further subsampling based on turning angle. For each frame, the average yaw rate $\overline{\Delta\varphi}$ per frame was computed for the corresponding proposed path as follows:

$$\overline{\Delta\varphi} = \frac{1}{k}\sum_i^k \varphi(\boldsymbol{G}_{C_{t+i-1}C_{t+i}}) \qquad (5)$$

where $\varphi(\boldsymbol{G})$ is a function that extracts the Euler yaw angle $\varphi$ from the SE(3) transform matrix B. In the example described, a histogram of average yaw rates was then built and random samples taken from the histogram bins to ensure an unbiased selection of different turning angles.

EXPERIMENTAL SETUP

In the tests of the embodiment of the invention being described, two different model segmentation networks were built for evaluation: one using the KITTI Raw dataset and one using the Oxford RobotCar dataset. These datasets were collected using different vehicles with different sensor setups, summarised in Table I:

| TABLE I - VEHICLE AND SETUP SUMMARY | | |
|---|---|---|
| **Vehicle** | **Oxford RobotCar Nissan LEAF** | **KIT AnnieWAY VW Passat** |
| **Camera Sensor** | Point Grey Bumblebee XB3 | 2 x Point Grey Flea2 |
| **Inout Resolution** | 640x256 | 621x187 |
| **LIDAR** | SICK LD-MRS 4-beam | Velodyne HDL-64E 64-beam |
| **Vehicle Width** | 2.43 m | 2.2 m |

*A. Platform Specifications*

Both vehicles 10 are equipped with stereo camera systems 12a and the stereo visual odometry approach described in the PhD thesis of W. Churchill cited above is used to compute the relative motion estimates required in Eq. 2.

The images 112 from the cameras 12a are cropped and downscaled to the resolutions listed in Table I before training.

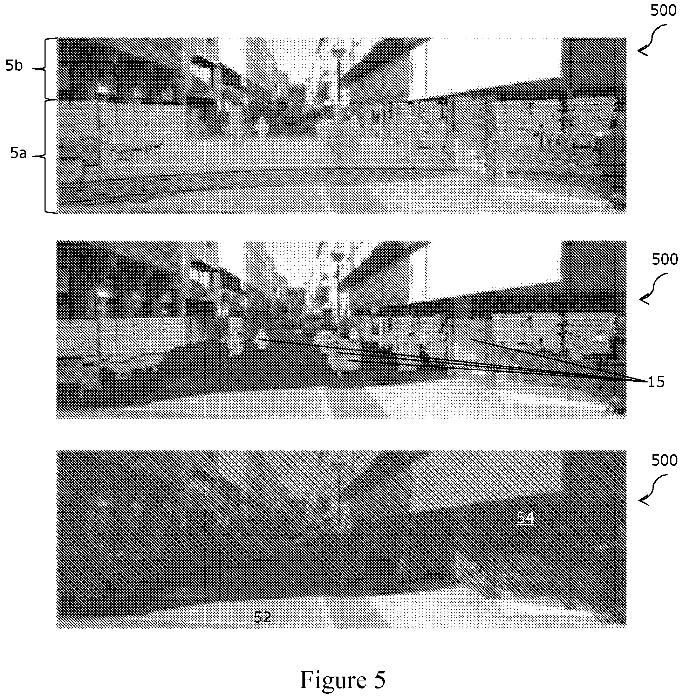

The Oxford RobotCar is equipped with a SICK LD-MRS LIDAR scanner/sensor 12b, which performs obstacle merging and tracking across 4 scanning planes in hardware. Points identified as "object contours" are used to remove erroneous obstacles due to noise and ground-strike. The Velodyne HDL-64E mounted on the AnnieWAY vehicle does not perform any object filtering, and hence the following approach is used to detect obstacles: a ground plane is fitted to the 3D LIDAR scan using MLESAC (see P. H. Torr and A. Zisserman, "Mlesac: A new robust estimator with application to estimating image geometry", Computer Vision and Image Understanding, vol. 78, no. 1, pp. 138-156, 2000), and treat all points more than roughly 0.25m above this plane as obstacles 15, as illustrated in Figure 5. This approach effectively identifies obstacles 15 the vehicle 10 may collide with even in the presence of pitching and rolling motions. The skilled person will appreciate that heights other than 0.25m may be chosen as appropriate. For example, the skilled person will appreciate that roughly any of the following may be suitable: 10cm, 15cm, 20cm, 30cm, 35cm, 40cm, 45cm.

Figure 5 shows obstacle labelling using Velodyne data for the KITTI dataset. Raw Velodyne scans (top image) contain returns from the road surface as well as nearby obstacles. A scanned region 5a and an unscanned region 5b of the image 500 are shown. The Velodyne scan data are indicated by light-coloured lines throughout the scanned region 5a.

A ground plane is fitted using MLESAC, and only points of the Velodyne scan data 0.25m above the plane are maintained (middle image). This is represented in the figures by removal of the light-coloured lines in the regions below 0.25m from the ground plane.

Pixels 54 which correspond to areas of the Velodyne scan data 0.25m or more above the ground plane are then labelled as obstacles using the approach described above (bottom image) to ensure accurate labels on obstacles 15 while retaining potentially drivable surfaces 52 on the ground (shaded pixels with \\ in bottom image). One or more areas of the potentially drivable surfaces 52 may then be labelled as path 14 and/or as unknown 16 using the approach described herein.

The camera-LIDAR calibration $G_{CL}$ for the RobotCar vehicle 10 was determined using the method in G. Pascoe, W. Maddern, and P. Newman, "Direct visual localisation and calibration for road vehicles in changing city environments", in Proceedings of the IEEE International Conference on Computer Vision Workshops, 2015, pp. 9-16; for the AnnieWAY vehicle the calibration provided with the KITTI Raw dataset was used.

*B. Network Training*

For the KITTI model, use was made of the available City, Residential and Road data from the KITTI Raw dataset. For the Oxford model, a diverse range of weather conditions for each traversal of the route were selected, including nine overcast, eight with direct sun, four with rain, two at night and one with snow; each traversal consisted of approximately 10 km of driving. The number of labelled images 108 used to train each model is shown in Table II and some examples are shown in Figure 6. In total, 24,443 images were used to train the KITTI model, and 49,980 images for the Oxford model.

| TABLE II TRAINING IMAGE SUMMARY STATISTICS | | |
|---|---|---|
| **Dataset** | **Condition** | **Training Images** |
| **KITTI** | City | 1264 |
| | Residential | 20734 |
| | Road | 2445 |
| | Total | 24443 |
| **Oxford** | Overcast | 17085 |
| | Sun | 16299 |
| | Rain | 9822 |
| | Night | 4170 |
| | Snow | 2604 |
| | Total | 49980 |

Figure 6 shows example training images 108 with weakly-supervised labels 14, 15, 16 from the KITTI (top) and Oxford (bottom) datasets. The weakly-supervised approach 100 generates proposed path 14 and obstacle labels 15 for a diverse set of locations in the KITTI dataset, and a diverse set of conditions for the same location in the Oxford dataset. The remainder is labelled as unknown area 16. No manual annotation is required to generate the labels.

For both datasets, semantic classifier models were built using the standard SegNet convolutional encoder-decoder architecture. The same SegNet parameters were used for both datasets, with modifications only to account for the differences in input image resolution. The input data were randomly split into 75% training and 25% validation sets, training performed for 100 epochs then the best-performing model selected according to the results on the validation set. The training time totalled ten days for KITTI using a GTX Titan GPU and twenty days for Oxford using a GTX Titan X GPU; future training times can be reduced using a different architecture or making use of a GPU cluster.

For the comparison using the KITTI Road benchmark presented below (ego-lane segmentation), an additional SegNet model was trained on only the training images provided for the Ego-Lane Estimation Evaluation. Note that these ground truth images 108 were not provided to the model segmentation unit 110 trained using the weakly-supervised approach 100 described above. For the object detection evaluation using the KITTI Object and Tracking datasets, there was no overlap between images selected to train the weakly-supervised labels and the images with ground truth labels used in the evaluation.

RESULTS

For reliable on-road driving, the semantic segmentation 100 preferably functions in multiple environments under the range of lighting, weather and traffic conditions encountered during normal operation. This Results section provides an evaluation of the performance of both the KITTI model and Oxford model under a range of different test conditions.

*A. Oxford Dataset*

The Oxford model was evaluated by generating ground truth labels for a further four datasets not used for training, consisting of 2,718 images in sunny conditions, 2,481 images in cloudy conditions, 2,340 images collected at night and 1,821 images collected in the rain, for a total of 9,360 test images. Table III presents the segmentation results for the three classes in each of the four different conditions in the test datasets listed above, with the "All" column showing the mean for each metric across all classes.

TABLE III SEGMENTATION RESULTS FOR OXFORD TEST DATA ACROSS VARYING CONDITIONS

| Condition | Proposed Path | | Obstacle | | Unknown Area | | All | |
|---|---|---|---|---|---|---|---|---|
| Night | PRE | 86.50% | PRE | 93.60% | PRE | 88.88% | PRE | 89.66% |
| | REC | 87.75% | REC | 93.71% | REC | 88.31% | REC | 89.92% |
| | IoU | 77.18% | IoU | 88.06% | IoU | 79.53% | IoU | 81.59% |

(continued)

| Condition | Proposed Path | | Obstacle | | Unknown Area | | All | |
|---|---|---|---|---|---|---|---|---|
| Rain | PRE | 89.55% | PRE | 94.04% | PRE | 91.41% | PRE | 91.66% |
| | REC | 86.97% | REC | 96.88% | REC | 88.73% | REC | 90.86% |
| | IoU | 78.95% | IoU | 91.27% | IoU | 81.90% | IoU | 84.04% |
| Overcast | **PRE** | **91.13%** | PRE | 94.76% | **PRE** | **93.41%** | **PRE** | **93.10%** |
| | **REC** | **92.63%** | REC | 96.68% | **RE** | **90.53%** | **REC** | **93.28%** |
| | **IoU** | **84.97%** | IoU | 91.77% | **IoU** | **85.09%** | **IoU** | **87.27%** |
| Sun | PRE | 89.50% | **PRE** | **94.85%** | PRE | 92.56% | PRE | 92.30% |
| | REC | 89.53% | **REC** | **97.01%** | REC | 90.05% | REC | 92.20% |
| | IoU | 81.02% | **IoU** | **92.16%** | IoU | 83.97% | IoU | 85.72% |

In Table III, the following metrics widely used in the field are used to quantify performance. Generated segmentations 114 are compared to ground truth segmentations 108 for the same image 106.

The intersection over union, IoU, values are a measure of the overlap between regions in a class in the generated segmentation and in the ground truth. A ground truth bounding box often will not exactly coincide with a bounding box determined by a labelling system. The question is, how much can they be offset against each other, and how much can they vary in size in order to still count as 'matched' to each other (as in pertaining to the same object)? IoU computes the ratio of the intersection of the areas covered by both boxes to the area of the union of both boxes, and can be applied to more general image segments (as in this case) instead of to bounding boxes per se.

Precision, PRE, is the fraction of class detections which truly are of that class. This may be pixel-based, for example, "9 out of 10 pixels labelled as being obstacles were actually obstacles".

Recall, REC, is the fraction of the class instances present in the data that were successfully detected. For example, if the ground truth segmentation indicates that there are ten obstacles in an image, how many of these were found? Again, this metric may be pixel-based instead of based on a number of objects.

The model (ie segmentation unit) 110 provides good performance across the different conditions with mean intersection-over-union (IoU) scores exceeding 80% in all cases, with the highest performance in cloudy weather and lowest at night, due to the reduced image quality in low-light conditions.

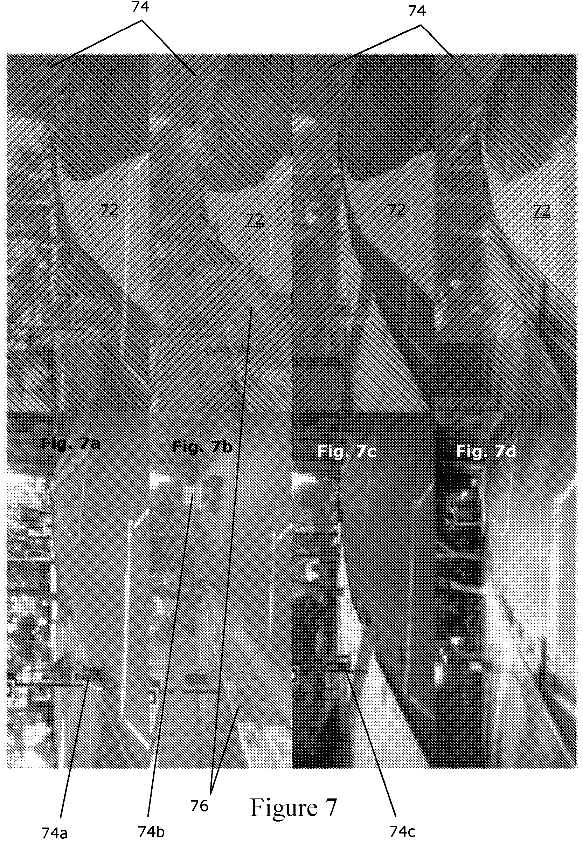

Figure 7 illustrates the output of the segmentation unit 110 for four images of the same location under different conditions. Despite significant changes in lighting and weather, the segmentation network 110 correctly determines the proposed path 14 through the crossing and identifies obstacles (e.g. construction barriers 76). Figure 7 shows semantic segmentation on frames 112 captured at the same location under different conditions.

Despite significant changes in appearance between sunny (Figure 7a), rainy (Figure 7b), snowy (Figure 7c) and night-time (Figure 7d) conditions, the network 110 correctly segments the proposed drivable path 72 and labels obstacles 74 including cyclists 74a, other vehicles 74b and road barriers 74c, 76.

This result demonstrates that the weakly-supervised approach 100 can be used to train a single segmentation network 110 that segments proposed paths 14 and obstacles 15 across a wide range of conditions without explicitly modelling environmental changes due to lighting, weather and traffic.

Figure 8 presents a number of locations where the segmentation network 110 proposed a valid path 14 in the absence of explicit road or lane markings, instead using the context of the road scene to infer the correct route. Figure 8 shows path proposals 14, 82 in locations without explicit lane dividers or road markings. Using the context of the road scene the segmentation network 110 infers the correct proposed path (top, middle), even for gravel roads 82a never seen in the training data (bottom).

Thus, Figure 8 gives three examples (top, middle and bottom). Each example is provided as two images, a leftmost image and a rightmost image. The leftmost image is shown un-marked, whilst the classes of pixel after segmentation (path 14, 82; obstacle 15; and unknown 16) are shown on the rightmost image.

B. KITTI Benchmarks

To demonstrate how the weakly-supervised labelling approach 100 disclosed herein can lead to useful performance for autonomous driving tasks, it was evaluated on two different benchmarks from the KITTI Vision Benchmark Suite (http://www.cvlibs.net/datasets/kitti/): ego-lane segmentation and object detection.

However, neither of these benchmarks are an exact match for the segmentation results provided by the segmentation network 110, as they were designed for different purposes; alternative metrics based on the provided ground truth are presented to quantitatively evaluate the approach 100.

*1) Ego-lane Segmentation:* The closest analogue to a *proposed path* in the KITTI benchmark suite is the ego-lane, consisting of the entire drivable surface within the lane the vehicle currently occupies (see the paper of J. Fritsch, T. Kuehnl, and A. Geiger cited above). The ego-lane dataset consists of 95 training and 96 test images, each with manually annotated ground truth labels.

An additional SegNet model was trained on the provided ground truth training images to compare to the segmentation unit 110 trained on weakly-supervised labelled images, as detailed above. The results of both the SegNet model and the segmentation unit 110 on the KITTI website benchmark are shown in Table IV. As is standard in the field, FPR means a false positive rate, FNR means a false negative rate. MaxF is Maximum F1 measure, F1 being a measure of a test's accuracy. Both the precision (PRE) and the recall (REC) of the test are considered to compute the F1 measure. Average precision (AP), as defined in 'M. Everingham, L. Van Gool, C. K. I. Williams, J. Winn, and A. Zisserman, "The pascal visual object classes (VOC) challenge," Int. J. of Computer Vision, vol. 88, no. 2, pp. 303-338, June 2010.', is computed for different recall values to provide insights into the performance over the full recall range

TABLE IV

EGO-LANE SEGMENTATION RESULTS ON THE KITTI ROAD BENCHMARK

| Training | Benchmark | MaxF | AP | PRE | REC | FPR | FNR |
|---|---|---|---|---|---|---|---|
| Provided | UM LANE | 52.42% | 37.85% | 77.88% | 39.50% | 1.98% | 60.50% |
| Weakly-Supervised | UM LANE | **72.88%** | **64.49%** | **92.78%** | **60.01%** | **0.82%** | **39.99%** |

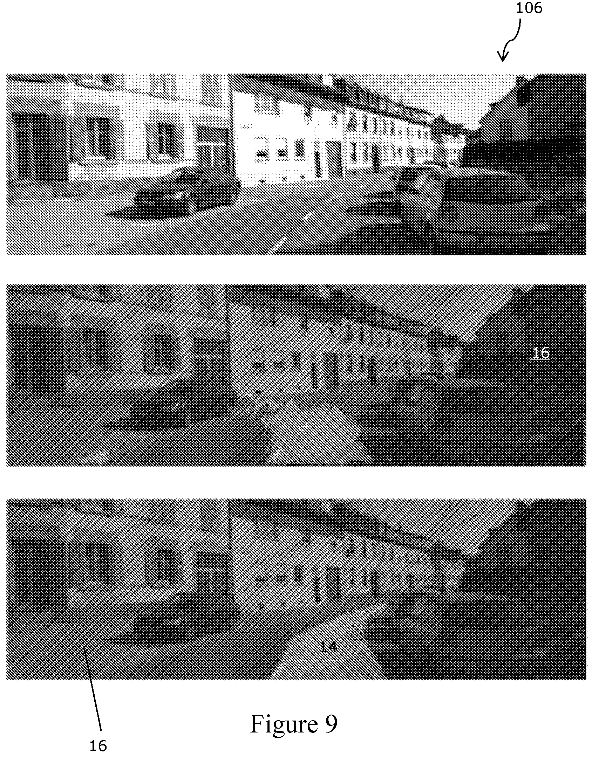

Figure 9 shows example ego-lane segmentation results obtained using the KITTI Road dataset. For the given input image 106 (top image), a SegNet model trained on the small number of manually-annotated ground truth images (middle image) performs poorly in comparison with the model segmentation unit 110 trained on the much larger weakly-supervised dataset (bottom image) generated without manual annotation.

Thus, Figure 9 illustrates a sample network output for both models and the weakly-supervised segmentation unit 110 outperforms the model trained on the provided ground truth images, with a 20% increase in max F score and 15% increase in precision exceeding 90% in total, despite the embodiment being described not making use of manually annotated ground truth images or explicit encoding of lane markings. Although the overall performance is not competitive with those generated by more sophisticated network architectures on the KITTI leaderboard (due to the different definition of ego-lane and proposed path), this result strongly indicates that the weakly-supervised approach 100 generates segmentations 108, 114 useful for real-world path planning.

The differences in the number of training images used for each model is illustrative of the fact that making manually-annotated datasets is more be more time-consuming and expensive to produce than the weakly-supervised approach 100 disclosed herein. Even if manually annotated data is also available, for many tasks the approach 100 could be used as pre-training to further improve results. Thus, the output from embodiments described herein may be used to seed further segmentation.

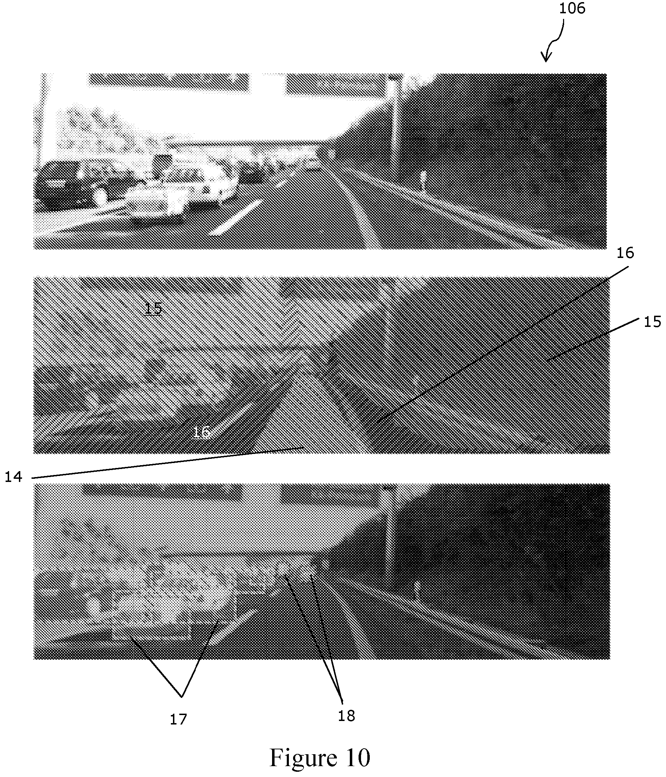

*2) Object Detection:* While the KITTI benchmark suite does not contain a semantic segmentation benchmark, it does contain object instance bounding boxes in both the Object and Tracking datasets. The definition of an *object* in the KITTI benchmark (an individual instance of a vehicle or person, for example, within a bounding box) differs significantly from the definition of an *obstacle* as part of the weakly-supervised approach 100 (any part of the scene the vehicle might collide with). However, object detection performance can be evaluated by ensuring that *object* instances provided by the KITTI Object and Tracking benchmarks are also classified as *obstacles* by the segmentation approach 100 described herein; hence the highest *pixel-wise recall* score is sought. For each object instance, the number of pixels within the bounding box classified as an obstacle is evaluated using the weakly-supervised approach 100, as illustrated in Figure 10.

Three different recall metrics are presented:

(i) pixel recall, which includes all pixels under all bounding boxes for each object class, and
(ii)-(iii) two variants of instance recall, which requires a certain fraction of obstacle-labelled pixels within each bounding box instance before the object is considered as "detected" (thresholds of 50% and 75% are presented).

Recall results on the data provided as part of the Object and Tracking datasets (consisting of 15,047 images with 87,343 total object instances) are presented in Table V, and an example detection is shown in Figure 10. The object classes have been combined as follows: car, van, truck and tram labels are grouped as Vehicle; pedestrian, person sitting and cyclist labels are grouped as Person, and all others are grouped as Misc. The results show that the weakly-supervised segmentation approach 100 is reliably labelling *objects* as *obstacles* regardless of object class (and performs especially well for an instance recall threshold of 50%); this is helpful in avoiding planning trajectories that intersect other vehicles or road users.

TABLE V

OBSTACLE SEGMENTATION RESULTS ON THE KITTI OBJECT AND TRACKING DATASETS

| Metric | Vehicle | Person | Misc | All |
|---|---|---|---|---|
| Pixel Recall | 93.73% | 92.47% | 94.11% | 93.53% |
| Instance Recall (>50%) | 99.52% | 99.65% | 99.29% | 99.55% |
| Instance Recall (>75%) | 98.15% | 97.38% | 96.73% | 97.93% |

Figure 10 shows example object detection results using obstacle segmentation. For a given input image (top), the network labels areas corresponding to proposed path 14, obstacle 15 and unknown area 16 (middle). For each ground truth bounding box provided in the KITTI Object and Tracking datasets, the ratio of pixels labelled as obstacle 15 by the method 100 is computed (bottom). For each object instance, it is considered to be detected (for example bounding boxes 17) if more than 75% of the pixels within the bounding box 17 are labelled as obstacles. Note that even for failed detections (bounding boxes 18, of which the outlines are shaded differently from bounding boxes 17 to indicate the detection difference), a number of the pixels were still labelled as obstacle, and due to the tight obstacle outlines provided by this method 100, portions of the bounding box 17, 18 may be missed (e.g. undercarriage of vehicles at bottom left).

*C. Limitations*

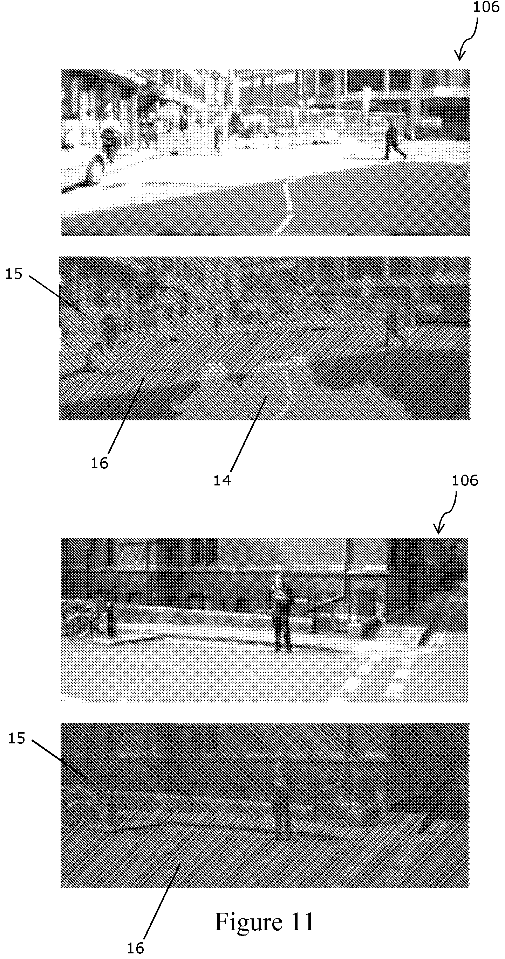

Under some conditions the segmentation network 110 of some embodiments may fail to produce useful proposed path segmentations, as illustrated in Figure 11. These failure cases are mostly due to limitations of the sensor suite 12a, 12b (e.g. poor exposure or low field of view), and could be addressed using a larger number of higher-quality cameras.

Figure 11 shows examples of proposed path segmentation failures. As shown by the top pair of images, overexposed or underexposed images may lead to incorrect path segmentation; this could be addressed by using a high dynamic-range camera 12a, for example.

As shown by the lower pair of images in Figure 11, at some intersections during tight turns, there is no clear path to segment as it falls outside the field of view of the camera 12a; using a wider field of view lens or multiple cameras in a surround configuration, for example, may well address this limitation.

*D. Route Generalisation*

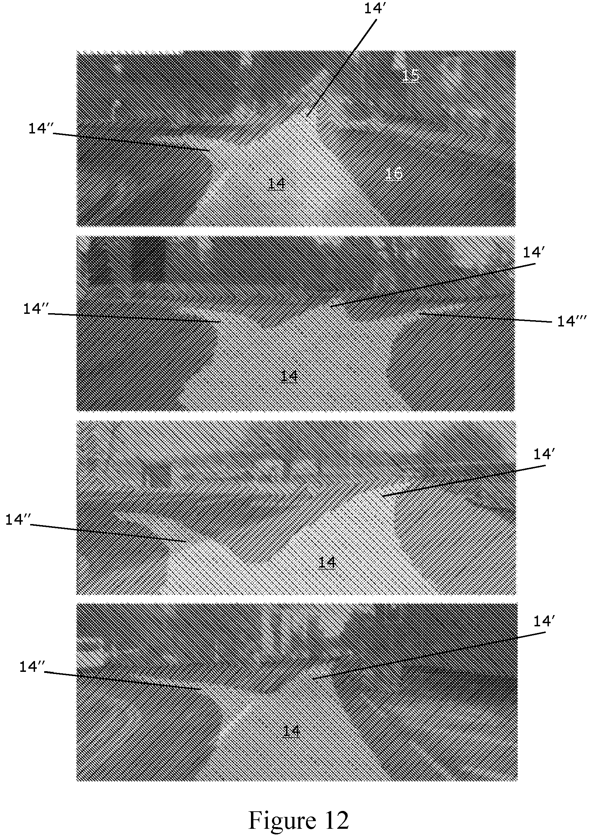

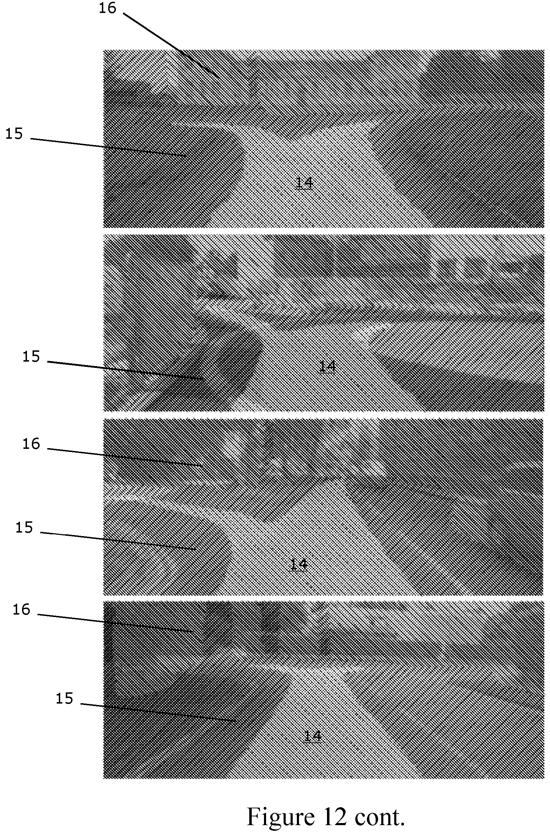

As the weakly-supervised labels 14, 15, 16 are generated from the recording 102, 104, 106 of a data collection trajectory, it can only provide one proposed path 14 per image 106 at training time. However, at intersections and other locations with multiple possible routes, at test time the resulting network 110 frequently labels multiple possible proposed paths 14 in the image 112 as shown in Figure 12. This may have particular utility in decision-making for topological navigation within a road network.

Figure 12 shows proposed path generalisation to multiple routes. The top, third from top and bottom images of Figure 12 each show a side-road 14" branching off to the left of the road 14' along which the vehicle 10 is driving; two proposed path options are therefore available. The second from top image of Figure 12 shows two side-roads, 14" and 14''', one on either side of the road 14' along which the vehicle 10 is driving. Three proposed path options are therefore available.

At intersections and roundabouts the network will often label different possible paths, 14, which can then be leveraged by a planning framework for decision making during autonomous navigation.

An approach 100 for weakly-supervised labelling of images 106, 112 for proposed path segmentation during on-road driving, optionally using only a monocular camera 12a, has been described above. The skilled person will appreciate that the specific example described is not intended to be limiting, and that many variations will fall within the scope of the claim.

It has been demonstrated that, by leveraging multiple sensors 12a, 12b and the behaviour of the data collection vehicle driver, it is possible to generate vast quantities of semantically-labelled training data 108 relevant for autonomous driving applications.

Advantageously, no manual labelling of images 106 is required in order to train the segmentation network 110.

Additionally, the approach does not depend on specific road markings or explicit modelling of lanes to propose drivable paths.

The approach 100 was evaluated in the context of ego-lane segmentation and obstacle detection using the KITTI dataset, outperforming networks trained on manually-annotated training data and providing reliable obstacle detections.

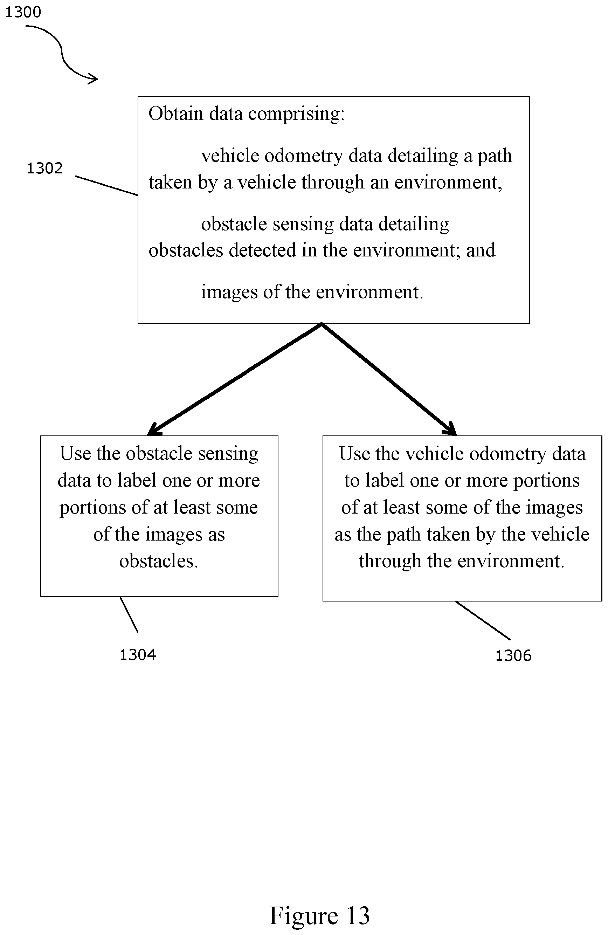

Figure 13 illustrates the method 1300 of an embodiment. At step 1302, data comprising vehicle odometry data detailing a path taken by a vehicle 10 through an environment, obstacle sensing data detailing obstacles detected in the environment, and images of the environment are obtained.

At step 1304, the obstacle sensing data obtained in step 1302 is used to label one or more portions of at least some of the images obtained in step 1302 as obstacles.

At step 1306, the vehicle odometry data obtained in step 1302 is used to label one or more portions of at least some of the images obtained in step 1302 as the path taken by the vehicle 10 through the environment.

The skilled person will appreciate that steps 1304 and 1306 may be performed in either order, or simultaneously. Further, step 1302 may be performed by a different entity from steps 1304 and/or 1306.

The robustness of the trained network 110 to changes in lighting, weather and traffic conditions was demonstrated using the large-scale Oxford RobotCar dataset, with successful proposed path segmentation in sunny, cloudy, rainy, snowy and night-time conditions.

Future work may integrate the network 110 with a planning framework that includes previous work on topometric localisation across experiences (C. Linegar, W. Churchill, and P. Newman, "Made to measure: Bespoke landmarks for 24-hour, all-weather localisation with a camera", in 2016 IEEE International Conference on Robotics and Automation (ICRA), IEEE, 2016, pp. 787-794) as well as a semantic map-guided approach for traffic light detection (D. Barnes, W. Maddern, and I. Posner, "Exploiting 3D semantic scene priors for online traffic light interpretation," in 2015 IEEE Intelligent Vehicles Symposium (IV). IEEE, 2015, pp. 573-578) to enable fully autonomous driving in complex urban environments.

**Claims**

1. A method of training a segmentation unit for autonomous route determination, wherein the segmentation unit is taught to identify a proposed path (14a) within an image (106, 112) that would be likely to be chosen by a driver, the method comprising:

   obtaining data from a data collection vehicle (10) driven along a path (14) through an environment, the data comprising:

   vehicle odometry data (102) detailing the path (14) along which the vehicle (10) is driven through the environment,
   obstacle sensing data (104) detailing obstacles detected in the environment; and
   images (106, 112) of the environment;

   creating the training data set (108) by labelling the images (106, 112), the labelling comprising:

   using the obstacle sensing data (104) to label one or more portions of the environment represented in at least some of the images (106, 112) as obstacles;
   using the vehicle odometry data (102) to label one or more portions of the environment represented in at least some of the images (106, 112) as the path (14) along which the vehicle (10) is driven through the environment; and training the segmentation unit using the training dataset (108) to identify the proposed path.

2. A segmentation unit trained for autonomous route determination using the training method (108) of claim 1, wherein the segmentation unit is taught to identify a path (14a) through an environment represented in an image that would be likely to be chosen by a driver, and optionally to identify regions (15a) containing obstacles.

3. The segmentation unit of claim 2, wherein the segmentation unit is a semantic segmentation network (110).

4. Use of the trained segmentation unit (110) of claim 2 or claim 3 for autonomous route determination, optionally including segmentation of regions (15a) containing obstacles.

5. An autonomous vehicle (10) comprising:

   a segmentation unit (110) according to claim 2 or claim 3; and
   a sensor (12a) arranged to capture images (106, 112) of an environment around the autonomous vehicle (10);
   wherein a route (14) of the autonomous vehicle (10) through the environment is determined by the segmentation unit (110) using images (106, 112) captured by the sensor (12a).

6. The autonomous vehicle of claim 5 wherein the only sensor (12a) used by the autonomous vehicle for route determination is a monocular camera (12a).

7. A method of controlling an autonomous vehicle to follow a route, the method comprising:

training a segmentation unit (110) using a training dataset (108), wherein the training dataset (108) is generated by processing data comprising:

test vehicle odometry data (102) detailing a path (14) along which a test vehicle (10) is driven through an environment,
obstacle sensing data (104) detailing obstacles detected in the environment; and
images (106) of the environment;
creating the training data set (108) by labelling the images (106, 112), the labelling comprising:

using the obstacle sensing data (104) to label one or more portions of the environment represented in at least some of the images (106, 112) as obstacles;
using the test vehicle odometry data (102) to label one or more portions of the environment represented in at least some of the images (106, 112) as the path (14) along which the test vehicle (10) is driven through the environment;

using the training dataset (108) to train the segmentation unit (110);
using the trained segmentation unit (110) to inform a route planner of the
autonomous vehicle; and
using the route planner to generate routes for the autonomous vehicle to follow through an environment.

**Patentansprüche**

1. Verfahren zum Trainieren einer Segmentierungseinheit für autonome Routenbestimmung,

wobei der Segmentierungseinheit beigebracht wird, einen vorgeschlagenen Weg (14a) innerhalb eines Bildes (106, 112) zu identifizieren, der wahrscheinlich durch einen Fahrer gewählt würde, das Verfahren umfassend: Erhalten von Daten von einem Datensammlungsfahrzeug (10), das entlang eines Weges (14) durch eine Umgebung gefahren wird, die Daten umfassend:

Fahrzeugodometriedaten (102), die den Weg (14) detailliert beschreiben, entlang dessen das Fahrzeug (10) durch die Umgebung gefahren wird,
Hinderniserfassungsdaten (104), die in der Umgebung erkannte Hindernisse detailliert beschreiben; und
die Bilder (106, 112) der Umgebung;
Erstellen des Trainingsdatensatzes (108) durch ein Bezeichnen der Bilder (106, 112), das Bezeichnen umfassend:
Verwenden der Hinderniserfassungsdaten (104), um einen oder mehrere Teile der Umgebung, die in mindestens einigen der Bilder (106, 112) dargestellt sind, als Hindernisse zu bezeichnen; Verwenden der Fahrzeugodometriedaten (102), um einen oder mehrere Teile der Umgebung, die in mindestens einigen der Bilder (106, 112) dargestellt sind, als den Weg (14) zu bezeichnen, entlang dessen das Fahrzeug (10) durch die Umgebung gefahren wird; und Trainieren der Segmentierungseinheit unter Verwendung des Trainingsdatensatzes (108), um den vorgeschlagenen Pfad zu identifizieren.

2. Segmentierungseinheit, die mit der Trainingsmethode (108) für die autonome Routenbestimmung nach Anspruch 1 trainiert wird, wobei der Segmentierungseinheit beigebracht wird, einen Weg (14a) durch eine in einem Bild dargestellte Umgebung zu identifizieren, der durch einen Fahrer wahrscheinlich gewählt würde, und optional Bereiche (15a) zu identifizieren, die Hindernisse enthalten.

3. Segmentierungseinheit nach Anspruch 2, wobei die Segmentierungseinheit ein semantisches Segmentierungsnetzwerk (110) ist.

4. Verwendung der trainierten Segmentierungseinheit (110) nach Anspruch 2 oder 3 für die autonome Routenbestimmung, optional einschließlich einer Segmentierung von Bereichen (15a), die Hindernisse enthalten.

**5.** Autonomes Fahrzeug (10), umfassend:

eine Segmentierungseinheit (110) nach Anspruch 2 oder 3; und
einen Sensor (12a), der dazu angeordnet ist, Bilder (106, 112) einer Umgebung um das autonome Fahrzeug (10) herum aufzunehmen;
wobei eine Route (14) des autonomen Fahrzeugs (10) durch die Umgebung durch die Segmentierungseinheit (110) unter Verwendung von Bildern (106, 112) bestimmt wird, die durch den Sensor (12a) aufgenommen werden.

**6.** Autonomes Fahrzeug nach Anspruch 5, wobei der einzige Sensor (12a), der durch das autonome Fahrzeug für die Routenbestimmung verwendet wird, eine monokulare Kamera (12a) ist.

**7.** Verfahren zum Steuern eines autonomen Fahrzeugs, um einer Route zu folgen, das Verfahren umfassend:
Trainieren einer Segmentierungseinheit (110) unter Verwendung eines Trainingsdatensatzes (108), wobei der Trainingsdatensatz (108) durch eine Verarbeitung von Daten erzeugt wird, umfassend:

Testfahrzeugodometriedaten (102), die einen Weg (14) detailliert beschreiben, entlang dessen ein Testfahrzeug (10) durch eine Umgebung gefahren wird,
Hinderniserfassungsdaten (104), die in der Umgebung erkannte Hindernisse detailliert beschreiben; und
Bilder (106) der Umgebung;
Erstellen des Trainingsdatensatzes (108) durch das Bezeichnen der Bilder (106, 112), das Bezeichnen umfassend:
Verwenden der Hinderniserfassungsdaten (104), um einen oder mehrere Teile der Umgebung, die in mindestens einigen der Bilder (106, 112) dargestellt sind, als Hindernisse zu bezeichnen;
Verwenden der Testfahrzeugodometriedaten (102), um einen oder mehrere Abschnitte der Umgebung, die in mindestens einigen der Bilder (106, 112) dargestellt sind, als den Weg (14) zu bezeichnen, entlang dessen das Testfahrzeug (10) durch die Umgebung gefahren wird;
Verwenden des Trainingsdatensatzes (108), um die Segmentierungseinheit (110) zu trainieren;
Verwenden der trainierten Segmentierungseinheit (110), um einen Routenplaner des autonomen Fahrzeugs zu informieren; und
Verwenden des Routenplaners, um Routen für das autonome Fahrzeug zu erzeugen, denen es durch eine Umgebung folgen kann.

**Revendications**

**1.** Procédé d'entraînement d'une unité de segmentation pour une détermination d'itinéraire autonome,
dans lequel l'unité de segmentation est formée pour identifier un chemin proposé (14a) dans une image (106, 112) qui serait susceptible d'être choisi par un conducteur, le procédé comprenant :

l'obtention de données à partir d'un véhicule de collecte de données (10) conduit le long d'un chemin (14) dans un environnement, les données comprenant :
des données d'odométrie de véhicule (102) détaillant le chemin (14) le long duquel le véhicule (10) est conduit dans l'environnement,
des données de détection d'obstacle (104) détaillant des obstacles détectés dans l'environnement ; et
des images (106, 112) de l'environnement ;
la création de l'ensemble de données d'entraînement (108) en marquant les images (106, 112), le marquage comprenant :

l'utilisation des données de détection d'obstacle (104) pour marquer une ou plusieurs parties de l'environnement représentées dans au moins certaines des images (106, 112) en tant qu'obstacles ;
l'utilisation des données d'odométrie de véhicule (102) pour marquer une ou plusieurs parties de l'environnement représentées dans au moins certaines des images (106, 112) en tant que chemin (14) le long duquel le véhicule (10) est conduit dans l'environnement ; et
l'entraînement de l'unité de segmentation à l'aide de l'ensemble de données d'entraînement (108) afin d'identifier le chemin proposé.

**2.** Unité de segmentation entraînée pour une détermination d'itinéraire autonome à l'aide du procédé d'entraînement (108) selon la revendication 1, dans laquelle l'unité de segmentation est formée pour identifier un chemin (14a) dans un environnement représenté dans une image qui serait susceptible d'être choisi par un conducteur, et éventuellement pour identifier des régions (15a) contenant des obstacles.

3.  Unité de segmentation selon la revendication 2, dans laquelle l'unité de segmentation est un réseau de segmentation sémantique (110).

4.  Utilisation de l'unité de segmentation entraînée (110) selon la revendication 2 ou la revendication 3 pour une détermination d'itinéraire autonome, comportant éventuellement une segmentation de régions (15a) contenant des obstacles.

5.  Véhicule autonome (10) comprenant :

    une unité de segmentation (110) selon la revendication 2 ou la revendication 3 ; et
    un capteur (12a) conçu pour capturer des images (106, 112) d'un environnement autour du véhicule autonome (10) ;
    dans lequel un itinéraire (14) du véhicule autonome (10) dans l'environnement est déterminé par l'unité de segmentation (110) à l'aide d'images (106, 112) capturées par le capteur (12a).

6.  Véhicule autonome selon la revendication 5, dans lequel le seul capteur (12a) utilisé par le véhicule autonome pour la détermination d'itinéraire est une caméra monoculaire (12a).

7.  Procédé de commande d'un véhicule autonome pour suivre un itinéraire, le procédé comprenant :
    l'entraînement d'une unité de segmentation (110) à l'aide d'un ensemble de données d'entraînement (108), dans lequel l'ensemble de données d'entraînement (108) est généré par le traitement de données comprenant :

    des données d'odométrie de véhicule d'essai (102) détaillant un chemin (14) le long duquel un véhicule d'essai (10) est conduit dans un environnement,
    des données de détection d'obstacles (104) détaillant des obstacles détectés dans l'environnement ; et
    des images (106) de l'environnement ;
    la création de l'ensemble de données d'entraînement (108) en marquant les images (106, 112), le marquage comprenant :

    l'utilisation des données de détection d'obstacles (104) pour marquer une ou plusieurs parties de l'environnement représentées dans au moins certaines des images (106, 112) en tant qu'obstacles ;
    l'utilisation des données d'odométrie de véhicule d'essai (102) pour marquer une ou plusieurs parties de l'environnement représentées dans au moins certaines des images (106, 112) en tant que chemin (14) le long duquel le véhicule d'essai (10) est conduit dans l'environnement ;
    l'utilisation de l'ensemble de données d'entraînement (108) pour entraîner l'unité de segmentation (110) ;
    l'utilisation de l'unité de segmentation entraînée (110) pour informer un planificateur d'itinéraire du véhicule autonome ; et
    l'utilisation du planificateur d'itinéraire pour générer des itinéraires à suivre par le véhicule autonome dans un environnement.

# Training

100

12a

| 102 |
| --- |
| Odometry |

12b

| 104 |
| --- |
| Obstacles |

10

| 106 |
| --- |
| Training Images |

| 108 |
| --- |
| Self-Supervised Labelled Training Image |

| 110 |
| --- |
| Segmentation Network |

# Deployment

12a

| 112 |
| --- |
| Live Image |

| 114 |
| --- |
| Live Segmentation |

Figure 1A

Figure 1B

Figure 1B – cont.

Figure 2

Figure 3

Figure 4

Figure 5

Figure 6

Figure 7

Figure 8

Figure 9

106

16

15

15

14

17          18

Figure 10

Figure 11

Figure 12

Figure 12 cont.

1300

1302

Obtain data comprising:

vehicle odometry data detailing a path taken by a vehicle through an environment,

obstacle sensing data detailing obstacles detected in the environment; and images of the environment.

Use the obstacle sensing data to label one or more portions of at least some of the images as obstacles.

Use the vehicle odometry data to label one or more portions of at least some of the images as the path taken by the vehicle through the environment.

1304

1306

Figure 13

## REFERENCES CITED IN THE DESCRIPTION

### Non-patent literature cited in the description

- Shadow resistant road segmentation from a mobile monocular system. **J. M. "ALVAREZ**; **A. M. L'OPEZ**; **R. BALDRICH**. Iberian Conference on Pattern Recognition and Image Analysis. Springer, 2007, 9-16
- Real-time traversable surface detection by colour space fusion and temporal analysis. **I. KATRAMA-DOS**; **S. CRUMPLER**; **T. P. BRECKON**. International Conference on Computer Vision Systems. Springer, 2009, 265-274
- Video-based lane estimation and tracking for driver assistance: survey, system, and evaluation. **J. C. MCCALL**; **M. M. TRIVEDI**. IEEE transactions on intelligent transportation systems. 2006, vol. 7, 20-37
- Road region estimation using a sequence of monocular images. **K. YAMAGUCHI**; **A. WATANABE**; **T. NAITO**; **Y. NINOMIYA**. Pattern Recognition. IEEE, 2008, 1-4
- **R. LABAYRADE**; **J. DOURET**; **J. LANEURIT**; **R. CHAPUIS**. A reliable and robust lane detection system based on the parallel use of three algorithms for driving safety assistance. *IEICE transactions on information and systems*, 2006, vol. 89 (7), 2092-2100
- **A. S. HUANG**; **S. TELLER**. Probabilistic lane estimation for autonomous driving using basis curves. *Autonomous Robots*, 2011, vol. 31 (2-3), 269-283
- New lane model and distance transform for lane detection and tracking. **R. JIANG**; **R. KLETTE**; **T. VAUDREY**; **S. WANG**. International Conference on Computer Analysis of Images and Patterns. Springer, 2009, 1044-1052
- **H. SAWANO**; **M. OKADA**. A road extraction method by an active contour model with inertia and differential features. *IEICE transactions on information and systems*, 2006, vol. 89 (7), 2257-2267
- **A. B. HILLEL**; **R. LERNER**; **D. LEVI**; **G. RAZ**. Recent progress in road and lane detection: a survey. *Machine vision and applications*, 2014, vol. 25 (3), 727-745
- **B. MA**; **S. LAKSHMANAN**; **A. O. HERO**. Simultaneous detection of lane and pavement boundaries using model-based multisensor fusion. *IEEE Transactions on Intelligent Transportation Systems*, 2000, vol. 1 (3), 135-147
- **A. S. HUANG**; **D. MOORE**; **M. ANTONE**; **E. OLSON**; **S. TELLER**. Finding multiple lanes in urban road networks with vision and LIDAR. *Autonomous Robots*, 2009, vol. 26 (2-3), 103-122
- **Y. LECUN**; **Y. BENGIO**; **G. HINTON**. Deep learning. *Nature*, 2015, vol. 521 (7553), 436-444
- **J. LONG**; **E. SHELHAMER**; **T. DARRELL**. Fully convolutional networks for semantic segmentation. *Proceedings of the IEEE Conference on Computer Vision and Pattern Recognition*, 2015, 3431-3440
- **G. PAPANDREOU**; **L.-C. CHEN**; **K. MURPHY**; **A. L. YUILLE**. Weakly- and semi-supervised learning of a DCNN for semantic image segmentation. *arXiv preprint arXiv:1502.02734*, 2015
- **G. J. BROSTOW**; **J. FAUQUEUR**; **R. CIPOLLA**. Semantic object classes in video: A high-definition ground truth database. *Pattern Recognition Letters*, 2009, vol. 30 (2), 88-97
- **M. CORDTS**; **M. OMRAN**; **S. RAMOS**; **T. REHFELD**; **M. ENZWEILER**; **R. BENENSON**; **U. FRANKE**; **S. ROTH**; **B. SCHIELE**. The Cityscapes dataset for semantic urban scene understanding. *arXiv preprint arXiv:1604.01685*, 2016
- **G. ROS**; **L. SELLART**; **J. MATERZYNSKA**; **D. VAZQUEZ**; **A. M. LOPEZ**. The SYNTHIA Dataset: A large collection of synthetic images for semantic segmentation of urban scenes. *Proceedings of the IEEE Conference on Computer Vision and Pattern Recognition*, 2016, 3234-3243
- **S. R. RICHTER**; **V. VINEET**; **S. ROTH**; **V. KOLTUN**. Playing for data: Ground truth from computer games. *arXiv preprint arXiv:1608.02192*, 2016
- **J. XIE**; **M. KIEFEL**; **M.T. SUN**; **A. GEIGER**. Semantic instance annotation of street scenes by 3D to 2D label transfer. *Conference on Computer Vision and Pattern Recognition (CVPR)*, 2016
- **D. A. POMERLEAU**. ALVINN: An autonomous land vehicle in a neural network. *DTIC Document, Tech. Rep.*, 1989
- **U. MULLER**; **J. BEN**; **E. COSATTO**; **B. FLEPP**; **Y. L. CUN**. Off-road obstacle avoidance through end-to-end learning. *Advances in neural information processing systems*, 2005, 739-746
- **M. BOJARSKI**; **D. DEL TESTA**; **D. DWORAKOWS-KI**; **B. FIRNER**; **B. FLEPP**; **P. GOYAL**; **L. D. JACKEL**; **M. MONFORT**; **U. MULLER**; **J. ZHANG et al.** End to end learning for self-driving cars. *arXiv preprint arXiv:1604.07316*, 2016

- **S. YENIKAYA** ; **G. YENIKAYA** ; **E. DIIVEN**. Keeping the vehicle on the road: A survey on on-road lane detection systems. *ACM Computing Surveys (CSUR)*, 2013, vol. 46 (1), 2
- Work smart, not hard: Recalling relevant experiences for vast-scale but time-constrained localisation. **LINEGAR CHRIS et al.** 2015 IEEE INTERNATIONAL CONFERENCE ON ROBOTICS AND AUTOMATION (ICRA). IEEE, 26 May 2015, 90-97
- **V. BADRINARAYANAN** ; **A. HANDA** ; **R. CIPOLLA**. SegNet: A deep convolutional encoder-decoder architecture for robust semantic pixelwise labelling. *arXiv preprint arXiv:1505.07293*, 2015
- **A. GEIGER** ; **P. LENZ** ; **C. STILLER** ; **R. URTASUN**. Vision meets robotics: The KITTI dataset. *The International Journal of Robotics Research*, 2013, 0278364913491297
- A new performance measure and evaluation benchmark for road detection algorithms. **J. FRITSCH** ; **T. KUEHNL** ; **A. GEIGER**. 16th International IEEE Conference on Intelligent Transportation Systems (ITSC 2013). IEEE, 2013, 1693-1700
- Experience based navigation: Theory, practice and implementation. **W. CHURCHILL**. Ph.D. dissertation. University of Oxford, 2012
- Efficient representation of traffic scenes by means of dynamic stixels. **D. PFEIFFER** ; **U. FRANKE**. Intelligent Vehicles Symposium (IV), 2010. IEEE, 2010, 217-224
- **B. D. ARGALL** ; **S. CHERNOVA** ; **M. VELOSO** ; **B. BROWNING**. A survey of robot learning from demonstration. *Robotics and autonomous systems*, 2009, vol. 57 (5), 469-483
- Learning autonomous driving styles and maneuvers from expert demonstration. **D. SILVER** ; **J. A. BAGNELL** ; **A. STENTZ**. Experimental Robotics. Springer, 2013, 371-386
- Stixmantics: A medium-level model for real-time semantic scene understanding. **T. SCHARWÄCHTER** ; **M. ENZWEILER** ; **U. FRANKE** ; **S. ROTH**. European Conference on Computer Vision. Springer, 2014, 533-548
- **G. PAPANDREOU** ; **L. C. CHEN** ; **K. MURPHY** ; **A. L. YUILLE**. Weakly- and semi-supervised learning of a DCNN for semantic image segmentation. *arXiv preprint arXiv:1502.02734*, 2015
- **P. H. TORR** ; **A. ZISSERMAN**. Mlesac: A new robust estimator with application to estimating image geometry. *Computer Vision and Image Understanding*, 2000, vol. 78 (1), 138-156
- **G. PASCOE** ; **W. MADDERN** ; **P. NEWMAN**. Direct visual localisation and calibration for road vehicles in changing city environments. *Proceedings of the IEEE International Conference on Computer Vision Workshops*, 2015, 9-16
- **M. EVERINGHAM** ; **L. VAN GOOL** ; **C. K. I. WILLIAMS** ; **J. WINN** ; **A. ZISSERMAN**. The pascal visual object classes (VOC) challenge. *Int. J. of Computer Vision*, June 2010, vol. 88 (2), 303-338
- Made to measure: Bespoke landmarks for 24-hour, all-weather localisation with a camera. **C. LINEGAR** ; **W. CHURCHILL** ; **P. NEWMAN**. 2016 IEEE International Conference on Robotics and Automation (ICRA). IEEE, 2016, 787-794
- Exploiting 3D semantic scene priors for online traffic light interpretation. **D. BARNES** ; **W. MADDERN** ; **I. POSNER**. 2015 IEEE Intelligent Vehicles Symposium (IV). IEEE, 2015, 573-578